(19) Europäisches Patentamt
European Patent Office
Office européen des brevets

(11) **EP 4 561 199 A1**

(12) **EUROPEAN PATENT APPLICATION**
published in accordance with Art. 153(4) EPC

(43) Date of publication:
**28.05.2025 Bulletin 2025/22**

(21) Application number: **23842786.8**

(22) Date of filing: **27.06.2023**

(51) International Patent Classification (IPC):
*H04W 52/38* (2009.01)          *H04W 16/28* (2009.01)
*H04W 84/12* (2009.01)

(52) Cooperative Patent Classification (CPC):
**H04W 16/28; H04W 52/38; H04W 84/12**

(86) International application number:
**PCT/JP2023/023857**

(87) International publication number:
**WO 2024/018855 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022   JP 2022115606**

(71) Applicant: **Panasonic Intellectual Property
Corporation
of America
Torrance, CA 90504 (US)**

(72) Inventors:
• **NAKANO, Takayuki**
  **Kadoma-shi, Osaka 571-0057 (JP)**
• **URABE, Yoshio**
  **Kadoma-shi, Osaka 571-0057 (JP)**
• **MOTOZUKA, Hiroyuki**
  **Kadoma-shi, Osaka 571-0057 (JP)**
• **IWAI, Takashi**
  **Kadoma-shi, Osaka 571-0057 (JP)**
• **TAKATA, Tomofumi**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **COMMUNICATION DEVICE AND COMMUNICATION METHOD**

(57)    The present invention improves the throughput of a communication system by means of a communication device comprising: a control circuit that performs transmission power control corresponding to a transmission scheme for each individual band included in multiple bands; and a transmitter/receiver circuit that transmits a signal using the multiple bands.

FIG. 34

## Description

Technical Field

The present disclosure relates to a communication apparatus and a communication method.

Background Art

In the Institute of Electrical and Electronics Engineers (IEEE), studies have been carried out on the IEEE 802.11be standard for the next generation radio Local Area Network (LAN), which is the successor to the IEEE 802.11ax standard. For example, the IEEE 802.11ax is also referred to as High Efficiency (HE), and the IEEE 802.11be is also referred to as Extreamly High Throughput (EHT).

Citation List

Non-Patent Literature

NPL 1
IEEE 802.11-20/1935r66, Compendium of straw polls and potential changes to the Specification Framework Document - Part 2
NPL 2
IEEE 802.11-20/1399r2, On Joint C-SR and C-OFDMAM-AP Transmission

Summary of Invention

Transmission power control for coordinated communication in radio communication such as a wireless LAN has not been sufficiently studied.

A non-limiting embodiment of the present disclosure facilitates providing a radio communication apparatus and a radio communication method each capable of performing appropriate transmission power control in coordinated communication.

A communication apparatus according to an embodiment of the present disclosure includes: control circuitry, which, in operation, performs transmission power control corresponding to a transmission scheme for each band constituting a plurality of bands; and transmission/reception circuitry, which, in operation, transmits a signal using the plurality of bands.

It should be noted that general or specific embodiments may be implemented as a system, an apparatus, a method, an integrated circuit, a computer program, a storage medium, or any selective combination thereof.

According to an embodiment of the present disclosure, it is possible to perform appropriate transmission power control in coordinated communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of differentiation between MAP schemes;
FIG. 2 illustrates an example of a transmission power spectral density;
FIG. 3 illustrates an example of transmission power control in a case where a MAP scheme is different for each band;
FIG. 4 illustrates another example of transmission power control in a case where a MAP scheme is different for each band;
FIG. 5 illustrates still another example of transmission power control in a case where a MAP scheme is different for each band;
FIG. 6 illustrates a method in which the MAP scheme is specified by information in Common Info;
FIG. 7 illustrates a method in which the MAP scheme is specified by information in Per AP Info;

FIG. 8 illustrates a method in which the MAP scheme is specified by information in Per STA Info in Per AP Info;

FIG. 9 illustrates a method in which the MAP scheme is specified by information in Per STA Info;

FIG. 10 illustrates a method for switching the format of specifying a MAP scheme;

FIG. 11 illustrates an example of transmission power control in a case where an SR operation is different for each band;

FIG. 12 illustrates another example of transmission power control in a case where an SR operation is different for each band;

FIG. 13 illustrates still another example of transmission power control in a case where an SR operation is different for each band;

FIG. 14 illustrates an example of transmission power control in a case where a Beamformed operation is different for each band;

FIG. 15 illustrates an overall sequence related to MAP communication;

FIG. 16 illustrates an example of transmission and reception of a Beacon frame and a Probe Request/Response frame in a setup phase;

FIG. 17 illustrates an example of transmission and reception of Association Request/Response frames in the setup phase;

FIG. 18 illustrates an example of transmission and reception of an Action frame in the setup phase;

FIG. 19 illustrates an example of transmission and reception of Control frames such as an NDPA frame for MAP, an NDP frame for MAP, a MAP Poll Trigger, and a MAP BFR in a measurement phase;

FIG. 20 illustrates an example of transmission and reception in a MAP setup phase in which a setup related to MAP is performed, and in a MAP data transmission;

FIG. 21 illustrates a configuration of an NGT Operation element based on an existing EHT Operation element;

FIG. 22 illustrates a configuration in which a new element is defined as a TPC Supported Subchannel element with a configuration similar to that of an EHT Operation element;

FIG. 23 illustrates a configuration in which a new element is defined as a TPC Supported Subchannel element with a configuration similar to that of the Supported Channels element;

FIG. 24 illustrates a configuration in which a new Category Action frame is defined as a TPC Support Action frame;

FIG. 25 illustrates a configuration of a TPC Support Action frame defined as one of the Public Action frames;

FIG. 26 illustrates a configuration in which an Action frame of a new Category is defined as an NGT Action frame, and further, a value of an NGT Action field is defined as a TPC Supported Subchannel Notification frame;

FIG. 27 illustrates an exemplary definition of a Subfield in an NGT EHT PHY Capabilities Information field;

FIG. 28 illustrates an exemplary definition for changing the range of a transmission power difference depending on an RU size;

FIG. 29 illustrates an example of defining a Capability in a range of the transmission power difference depending on an SR setting for each band;

FIG. 30 is a diagram for describing a case of uplink;

FIG. 31 illustrates an example of transmission power control in a case where the MAP scheme is different for each band in the uplink;

FIG. 32 is a block diagram illustrating an exemplary configuration of a part of an AP according to an embodiment of the present disclosure;

FIG. 33 is a block diagram illustrating an exemplary configuration of a part of an STA according to an embodiment of the present disclosure;

FIG. 34 is a block diagram illustrating an exemplary configuration of the AP; and

FIG. 35 is a block diagram illustrating an exemplary configuration of the STA.

Description of Embodiments

Hereinafter, embodiments of the present disclosure will be described in detail with reference to the accompanying drawings. Note that, the embodiments described below are merely examples, and the present disclosure is not limited to the embodiments described below.

Hereinafter, embodiments of the present disclosure will be described in detail with appropriate reference to the drawings. Note that any unnecessarily detailed description may be omitted. For example, detailed descriptions of well-known matters and redundant descriptions of substantially the same configuration may be omitted. This is to avoid the unnecessary redundancy of the following description and to facilitate understanding of a person skilled in the art.

Note that, the accompanying drawings and the following description are provided for a person skilled in the art to sufficiently understand the present disclosure, and are not intended to limit the subject matter described in the claims.

In IEEE 802.11be and the next generation standard, studies have been carried out on the application of Multi-AP (hereinafter, referred to as "MAP") coordination (hereinafter, also referred to as "coordinated communication") in which a plurality of access points (also referred to as "base stations," hereinafter referred to as "APs (Access Points)") cooperatively transmit and receive data to and from each terminal (also referred to as "non-AP STA," hereinafter referred to as "STA").

In the coordinated communication in IEEE 802.11be, a plurality of MAP coordinated communication schemes (hereinafter referred to as "MAP schemes") has been studied. For example, the MAP schemes are as follows (see, for example, NPL 1):

· Coordinated Spatial Reuse (hereinafter, referred to as "C-SR"),

· Coordinated OFDMA (hereinafter, referred to as C-OFDMA),

· Coordinated Beamforming·(hereinafter, referred to as C-BF), and

· Joint Transmissions·(hereinafter, referred to as JT).

In the present specification, JT is defined to include both a method of transmitting exactly the same signal from a plurality of coordinated APs and Distributed MU-MIMO (Multi-User Multi-Input Multi-Output) (hereinafter, referred to as "D-MIMO") in which different transmission streams are transmitted from a plurality of coordinated APs. Note that JT may be defined as a method of transmitting exactly the same signal from a plurality of coordinated APs, excluding D-MIMO.

Note that the term, MAP scheme, may be replaced with another term such as "communication type" or "MAP type," for example.

Further, it is known that system throughput and frequency utilization efficiency are improved by using a combination of C-SR and C-OFDMA (for example, see, NPL 2).

In a case where the MAP scheme is different for each band as described in NPL 2, a transmission power control (TPC) method may be different for each band, but the control method has not been determined.

For example, in a case where, in response to the transmission power control in one or some of the bands (for example, by C-SR), the transmission power of another band (for example, C-OFDMA or JT) is reduced, the performance in another band possibly deteriorates, the Modulation and Coding Scheme (MCS) value that can be selected becomes small, and the throughput of the communication system possibly decreases.

In the embodiment of the present disclosure, different transmission power control is performed for each band in multi-band transmission.

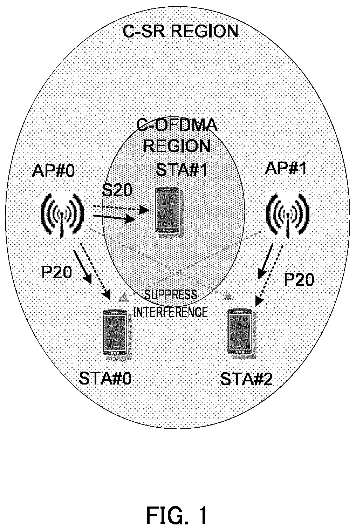

FIG. 1 is a diagram illustrating an example of differentiation between MAP schemes. In this example, the differentiated MAP schemes are exemplarily two types of C-SR and C-OFDMA. FIG. 1 illustrates an example in which STA#0 and STA#2 are located in the region of C-SR region, and STA#1 is located in the region of C-OFDMA. FIG. 1 illustrates an example in which STA#0 and STA#1 are connected to (associated with) AP#0, and STA#2 is connected to AP#1. Accordingly, AP#0 performs C-SR for STA#0 and C-OFDMA for STA#1. AP#1 performs C-SR for STA#2.

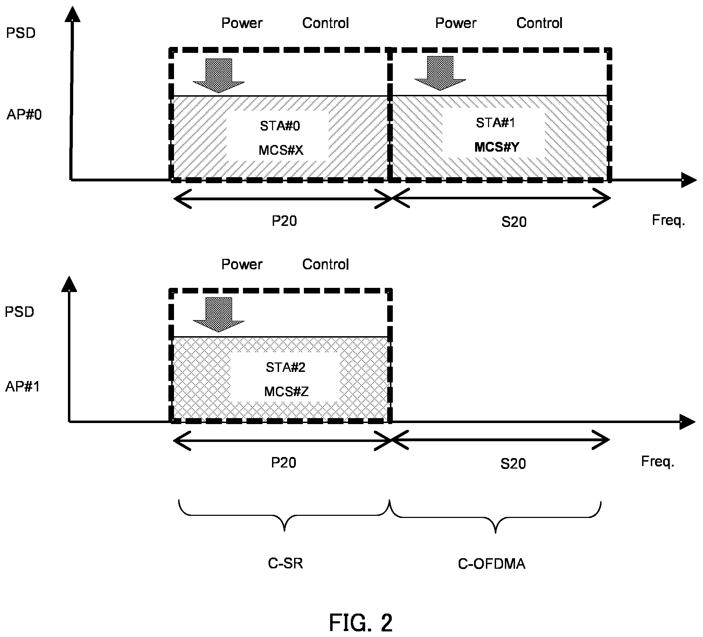

FIG. 2 is a diagram illustrating an example of the transmission power spectral density (PSD) of AP#0 and AP#1 in the example illustrated in FIG. 1.

AP#0 transmits to STA#0 by MCS#X in the Primary 20 MHz (P20) channel and transmits to STA#1 by MCS#Y in the Secondary 20 MHz (S20) channel.

AP#1 transmits to STA#2 by MCS#Z in the Primary 20 MHz (P20) channel and does not transmit in the Secondary 20 MHz (S20) channel.

Here, #X, #Y, and #Z each indicate an index of an MCS, and correspond to the values of 0 to 15 in the case of IEEE 802.11be.

STA#0 and STA#2 operate by C-SR, so that a signal is transmitted from AP#0 and AP#1 each in the same P20 channel. STA#1 operates by C-OFDMA, so that, in the S20 channel, a signal is transmitted from AP#0 to which STA#1 is connected, and no transmission is performed from AP#1.

Hereinafter, a band is exemplified, but may be also read as a Resource Unit (RU), a Channel, a Subchannel, or a Subband.

As illustrated in FIG. 2, AP is assumed to perform transmission with the same transmission power in all bands even in a case where the MAP scheme is different for each band. As a result, when the AP reduces the transmission power of another band (for example, C-OFDMA or JT) in response to the transmission power control of one or some of the bands (for example, by C-SR), the performance of another band possibly deteriorates, and the MCS value that can be selected possibly decrease, thereby resulting in a decrease in throughput.

For this problem, AP performing different transmission power control for each band according to a transmission scheme, for example, a MAP scheme, allows for selection of a high MCS value, thereby improving the throughput.

IEEE 802.11be describes a function of power boost for each RU in OFDMA transmission, but the range of the power boost is limited to ± 6 dB. This function is assumed for OFDMA transmission and is not assumed for a case where the transmission scheme, for example, the MAP scheme, is different for each band.

In the present disclosure, a high MCS value can be selected by performing transmission power control corresponding to a transmission scheme for each band that is a part of a plurality of bands, and thus the throughput is improved.

(Embodiment 1)

In Embodiment 1, AP performs transmission power control corresponding to a MAP scheme for each band as an example of performing different transmission power control for each band.

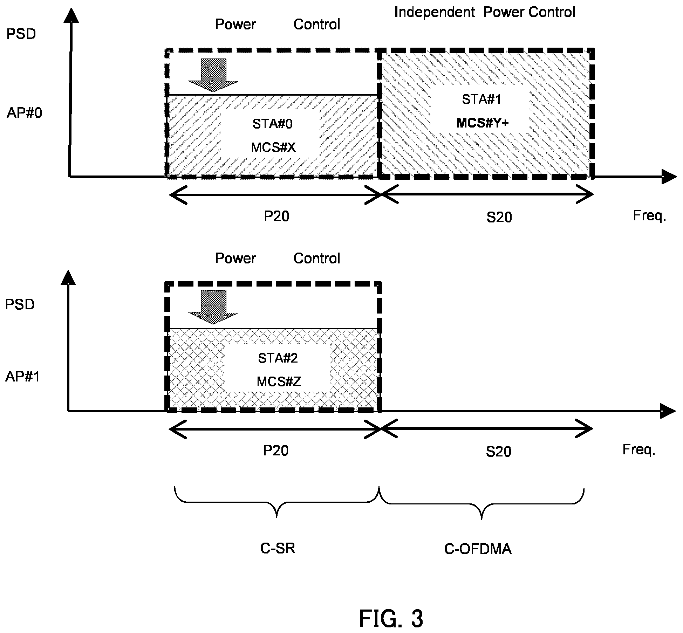

FIG. 3 is a diagram illustrating an example of transmission power control in a case where the MAP scheme is different for each band in the network illustrated in FIG. 1. As illustrated in FIG. 3, for example, C-SR is defined as a MAP scheme with transmission power control, and C-SR and MAP schemes other than C-SR perform transmission power control independently of each other. In the example illustrated in FIG. 3, in the P20 channel, both AP#0 and AP#1 perform transmission power control by C-SR, and in the S20 channel, the control is independent of that in the P20 channel. For example, AP#0 does not perform transmission power control and maintains the transmission power. Further, in C-SR, different transmission power control may be performed for C-SR of each band depending on the control type of C-SR or the difference in the interference situation.

According to the exemplary transmission power control in FIG. 3, the transmission power of a signal transmitted by AP is not reduced by the influence of transmission power control in another band, and thus, the throughput does not decrease.

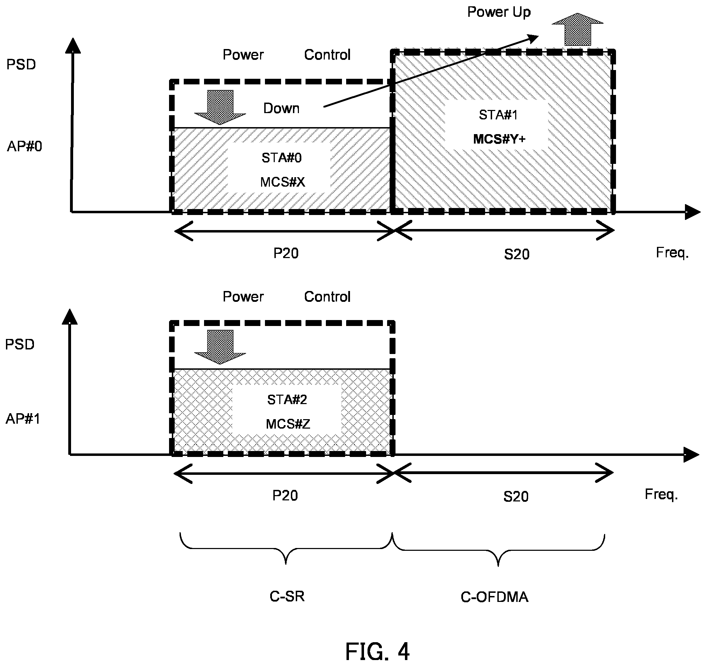

FIG. 4 is a diagram illustrating another example of transmission power control in a case where the MAP scheme is different for each band. As in another example shown in FIG. 4, in response to the change in transmission power in the band in which transmission power control is performed, transmission power in another band may be changed. For example, in a case where the transmission power is reduced in one or some of the bands, the transmission power may be increased in another band. The transmission power may be adjusted between bands such that the total transmission power is constant.

In the example of FIG. 3, no transmission power control is performed in the S20 channel. However, by the exemplary transmission power control in FIG. 4, when AP#0 transmits a signal in the S20 channel, AP#0 increases the transmission power of the signal transmitted in the S20 channel in a case where the transmission power of the signal transmitted in the P20 channel (other band) is reduced. This allows for the effective use of the entire transmission power of the transmitter.

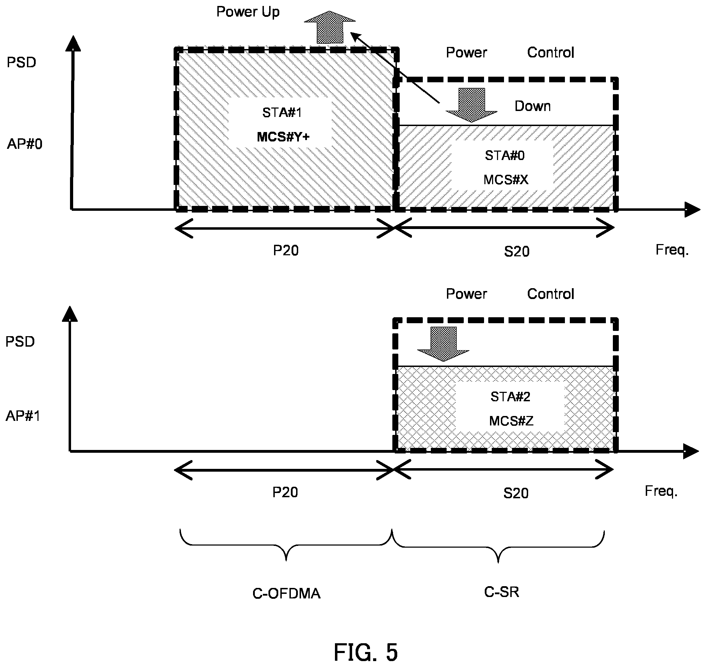

FIG. 5 is a diagram illustrating still another transmission power control example in a case where the MAP scheme is different for each band. As in the still another example shown in FIG. 5, AP may allocate a band and a MAP scheme to each STA and perform control such that the transmission power of the signal to be transmitted in the Primary channel is maximized. As illustrated in FIG. 5, each AP may assign C-OFMDA operation, for which no transmission power control is performed, to the Primary channel and assign C-SR, for which transmission power control is performed, to the Secondary channel.

In FIG. 5, AP#0 transmits a signal to STA#1 using MCS#Y+ (for example, MCS larger than MCS#Y) in the Primary 20 MHz (P20) channel, and transmits a signal to STA#0 using MCS#X in the Secondary 20 MHz (S20) channel. AP#1 does not transmit a signal in the Primary 20 MHz (P20) channel, but transmits a signal to STA#2 using MCS#Z in the Secondary 20 MHz (S20) channel.

In the example of transmission power control in FIG. 5, AP#0 assigns C-SR, for which transmission power control is performed, to the S20 channel, and C-OFDMA, for which transmission power control is not performed, to the P20 channel. Transmission power is increased for the signal transmitted in the P20 channel in a case where the transmission power is reduced by the transmission power control when a signal is transmitted in the S20 channel (another band).

In the transmission power control example in FIG. 4, the power of the signal transmitted in the Secondary channel is greater than the power of the signal transmitted in the Primary channel. In contrast, according to the transmission power control example in FIG. 5, by increasing the transmission power of the signal transmitted in the Primary channel of AP#0, the performance of receiving a preamble transmitted in the Primary channel is improved, thereby improving the throughput.

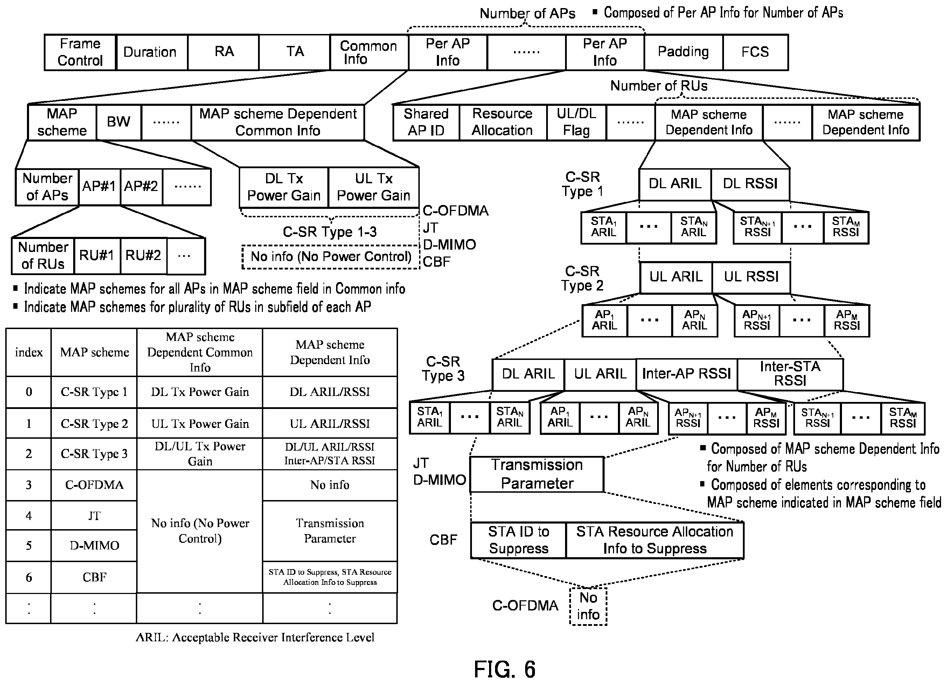

An exemplary method for specifying a MAP scheme for each band will be described with reference to FIGS. 6 to 10. The frames in FIGS. 6 to 10 may be trigger frames for MAP (for example, MAP Trigger frames).

FIG. 6 is a diagram illustrating a method in which the MAP scheme is specified by information of Common Info. As illustrated in FIG. 6, the frame includes Common Info and Per AP Info for each AP. Common Info includes a MAP scheme and MAP scheme Dependent Common Info. The MAP scheme includes Number of APs (the number of APs) and a subfield for each AP (AP#1, AP#2, ...). The subfield for each AP includes Number of RUs (the number of RUs) and a subfield for each RU (RU#1, RU#2, ...). Each Per AP Info includes MAP scheme Dependent Info (MAP scheme dependent information) for each RU. The MAP scheme Dependent Info includes information elements corresponding to the MAP scheme included in the subfield of each RU (RU#1, RU#2, ...). FIG. 6 is a diagram illustrating exemplary information elements of C-SR Type 1, C-SR Type 2, C-SR Type 3, JT, D-MIMO, CBF, and C-OFDMA.

In the MAP scheme in Common Info, the number of APs and the MAP schemes for all APs are indicated. In the subfield of each RU in the MAP scheme, the MAP scheme for each RU is indicated. Here, RU may be defined as a channel or a subchannel. MAP scheme Dependent Common Info and MAP scheme Dependent Info include information corresponding to the MAP scheme (for example, information on transmission power control). The MAP scheme may, for example, define information on the MAP scheme and MAP scheme Dependent Common Info according to the index as shown in the table at the lower left of FIG. 6.

The correspondence between the MAP scheme and the information element in MAP scheme Dependent Info may be determined according to the index together with the MAP scheme, as shown in the table in the lower left of FIG. 6, for example, or the correspondence between the MAP scheme and the information element may be specified in another table. Another table may be predetermined or may be specified by another method.

For the MAP scheme and MAP scheme Dependent Common Info, the MAP scheme and MAP scheme Dependent Common Info may be specified according to the Index as in the table in the lower left of FIG. 6, or the correspondence between the MAP scheme and the MAP scheme Dependent Common Info may be specified in another table. Another table may be predetermined or may be indicated by another method.

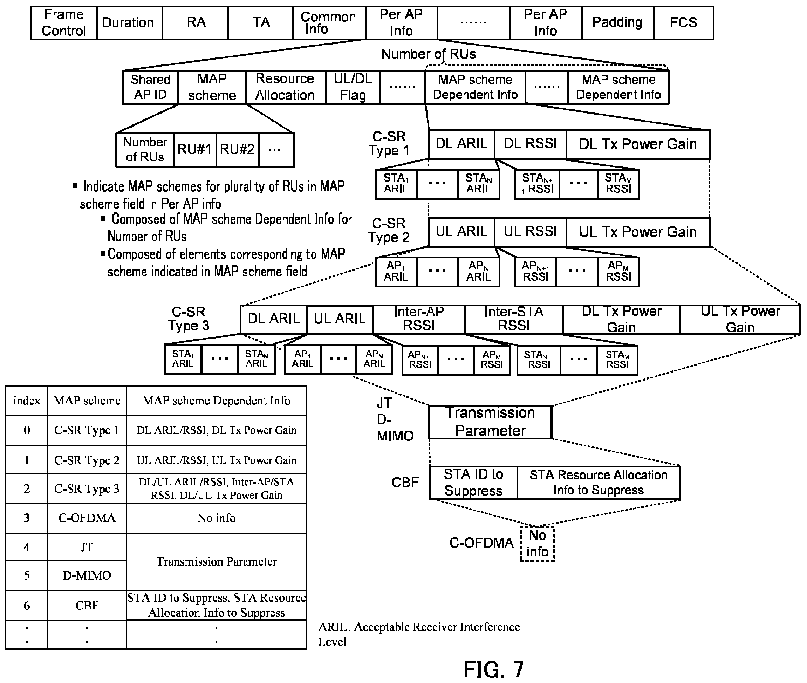

FIG. 7 is a diagram illustrating a method in which the MAP scheme is specified by information of Per AP Info. As illustrated in FIG. 7, the frame includes Per AP Info. Per AP Info includes MAP scheme and MAP scheme Dependent Info for Number of RUs.

The MAP scheme includes Number of RUs of the AP and a subfield for each RU (RU#1, RU#2, ...). RU#1, RU#2, ... each indicate the MAP scheme for corresponding RU. Each MAP scheme Dependent Info is composed of elements corresponding to the MAP schemes indicated by RU#1, RU#2, .... The definition of the MAP scheme and the correspondence between the MAP scheme and the information elements in the MAP scheme Dependent Info may be defined according to the index, as in FIG. 6.

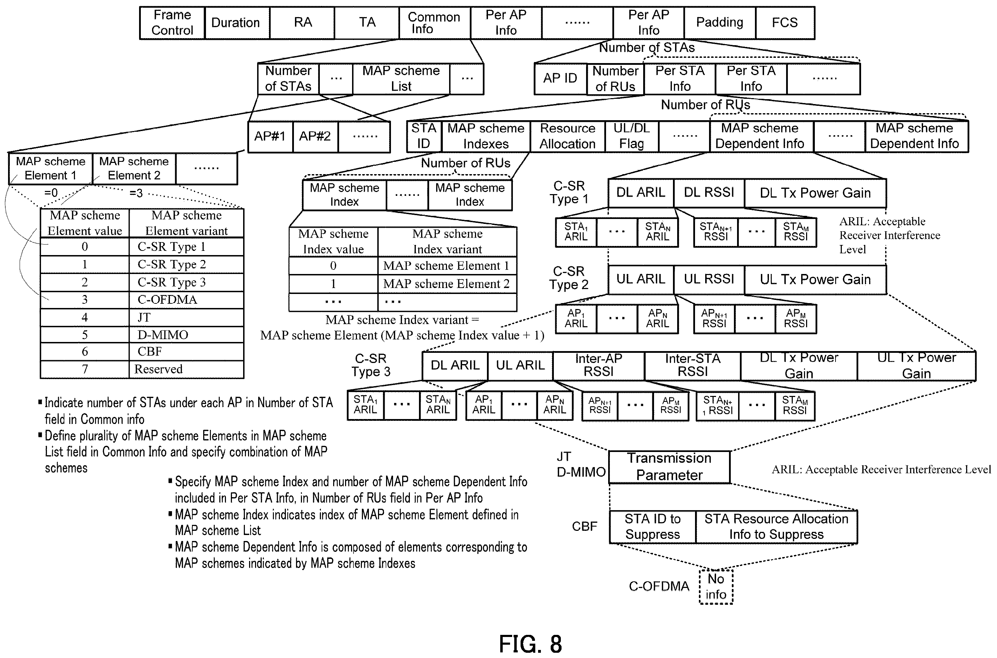

FIG. 8 is a diagram illustrating a method in which the MAP scheme is specified by information of Per STA Info in Per AP Info. As illustrated in FIG. 8, the frame includes Common Info (common information) and Per AP info (information for each AP). The Common Info includes the number of STAs (Number of STAs) connected to each AP and a MAP scheme List. As illustrated in FIG. 8, the MAP scheme List is composed of a plurality of MAP scheme Elements. Each MAP scheme Element includes one MAP scheme Element value corresponding to a MAP scheme Element variant. FIG. 8 illustrates an example in which, as a MAP scheme List, MAP scheme Element 1 includes MAP scheme Element value = 0 (C-SR Type 1) and MAP scheme Element 2 includes MAP scheme Element value = 3 (C-OFDMA), and the MAP scheme List including C-SR Type 1 and C-OFDMA is configured. Another MAP scheme Element value may be indicated. Per AP Info includes Number of RUs and Per STA Info (information for each STA) for each STA. Per STA Info includes MAP scheme Indexes and MAP scheme Dependent Info (MAP scheme dependent information) for each RU. The MAP scheme Indexes include a MAP scheme Index for each RU.

A MAP scheme is specified by each MAP scheme element. Each MAP scheme Element may be defined by associating a MAP scheme Element value and a MAP scheme with each other.

The Number of RUs in Per AP Info specifies the number of MAP scheme Indexes or MAP scheme Dependent Info included in Per STA Info.

MAP scheme Index indicates the index of the MAP scheme Element defined in the MAP scheme List. As illustrated in the table of the MAP scheme Index variant in FIG. 8, the correspondence between the MAP scheme Index and the MAP scheme Element is defined, and may be associated as follows, for example.

$$\text{MAP scheme Index variant} = \text{MAP scheme Element (MAP scheme Index value} + 1)$$

MAP scheme Dependent Info is composed of elements corresponding to the MAP scheme indicated by the MAP scheme Indexes. MAP scheme Dependent Info includes information elements corresponding to the MAP scheme for each RU.

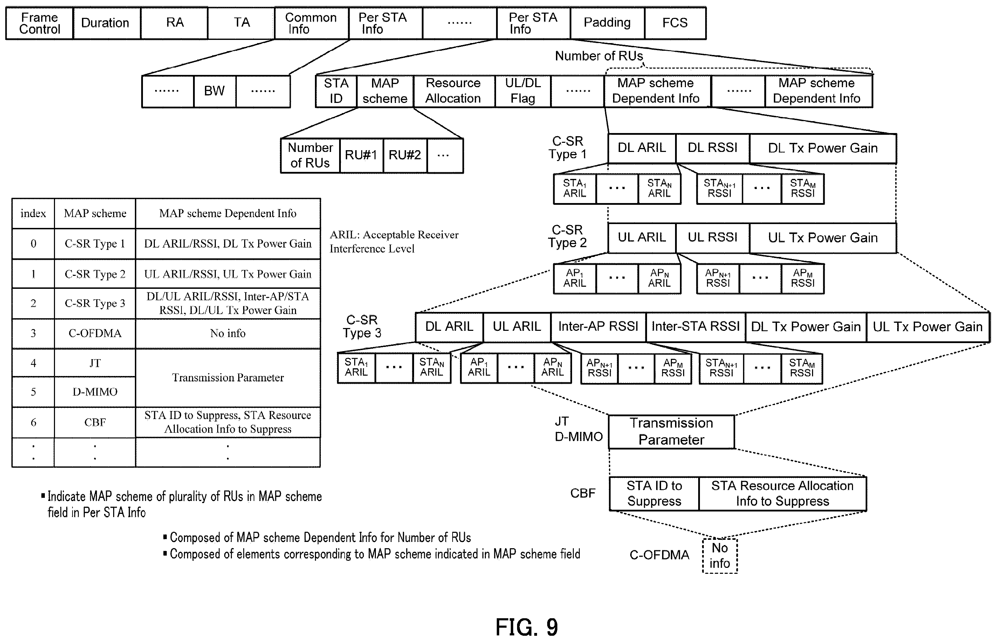

FIG. 9 is a diagram illustrating a method in which the MAP scheme is specified by information of Per STA Info. As illustrated in FIG. 9, the frame includes Per STA Info for each STA. Each Per STA Info includes a MAP scheme and MAP scheme Dependent Info for each RU. The MAP scheme includes Number of RUs and an indication of the MAP scheme for each RU (RU#1, RU#2, ...). Each MAP scheme Dependent Info is composed of elements corresponding to the MAP scheme indicated in RU#1, RU#2, ....

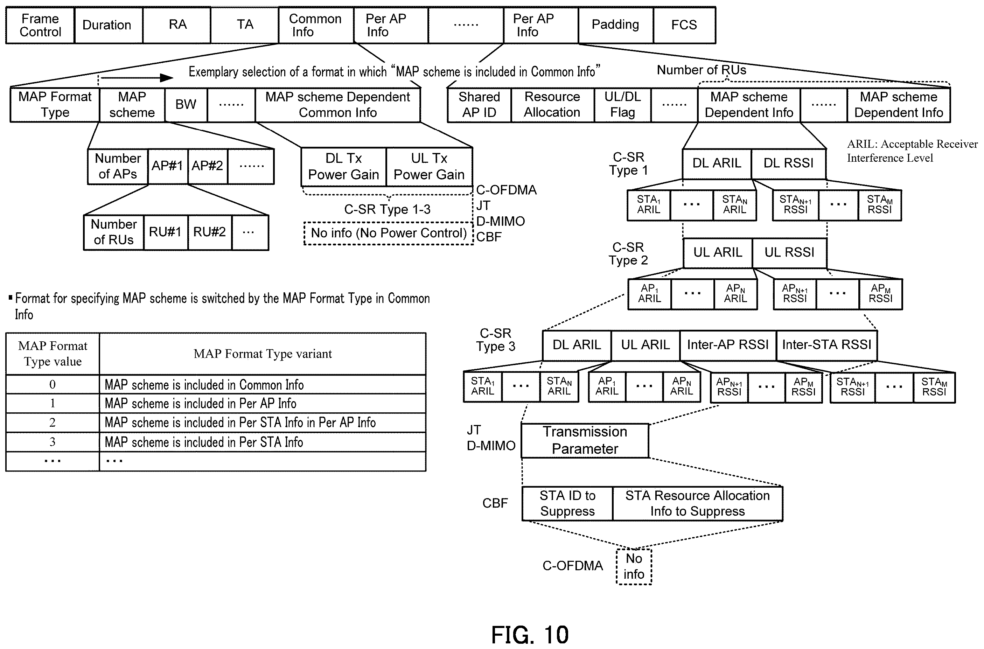

FIG. 10 is a diagram illustrating a method for switching the format for the MAP scheme specification. As illustrated in FIG. 10, the frame includes Common Info. The Common Info includes a MAP Format Type.

The format for specifying the MAP scheme is switched by the MAP Format Type. As illustrated in the table in the lower left of FIG. 10, the specification method as illustrated in FIGS. 6 to 9 is switched in accordance with the MAP Format Type value. The example in FIG. 10 shows a frame in a case where 0 is indicated as the MAP Format Type value and the specification method in which the MAP scheme is included in the Common Info is selected.

As described above, according to Embodiment 1, AP can select a higher MCS by performing transmission power control corresponding to the MAP scheme for each band, thereby improving the throughput of the communication system.

(Embodiment 2)

In Embodiment 2, AP performs transmission power control according to whether a Spatial Reuse (SR) operation is performed for each band as an example of performing different transmission power control for each band.

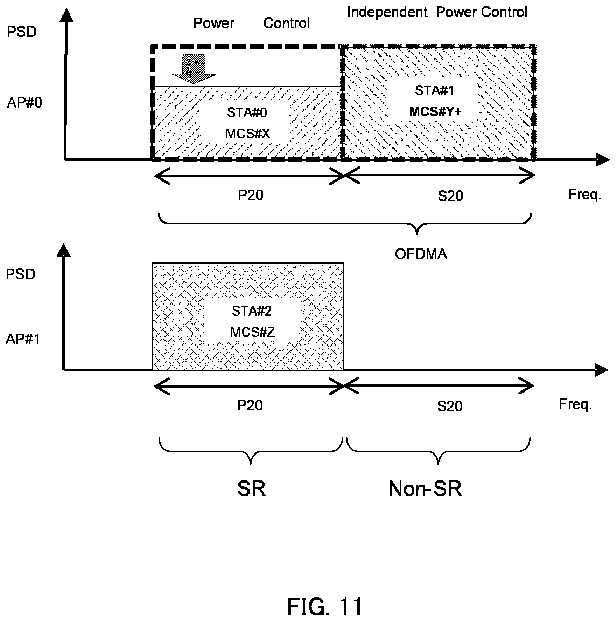

FIG. 11 is a diagram illustrating an example of transmission power control in a case where the SR operation is different for each band. AP#0 performs OFDMA multiplexing with the P20 channel and the S20 channel, and allocates the channels to STA#0 and STA#1, respectively. AP#1 allocates the P20 channel to STA#2 as an SR operation and the S20 channel as a non-SR operation.

AP#0 performs the SR operation for the P20 channel and suppresses the transmission power of the signal to be transmitted in the P20 channel of AP#0 in order to prevent interference with STA#2. On the other hand, the transmission power of the signal to be transmitted in the S20 channel of AP#0 is independent of the transmission power control of the P20 channel, and for example, no transmission power control is performed. FIG. 11 illustrates an example in which the signal transmitted in the P20 channel of AP#1 is transmitted without performing transmission power control, and the transmission power is maintained. FIG. 11 illustrates an example in which, for a signal transmitted in a P20 channel in which an SR operation is performed, AP#0 reduces the transmission power while AP#1 does not reduce the transmission power.

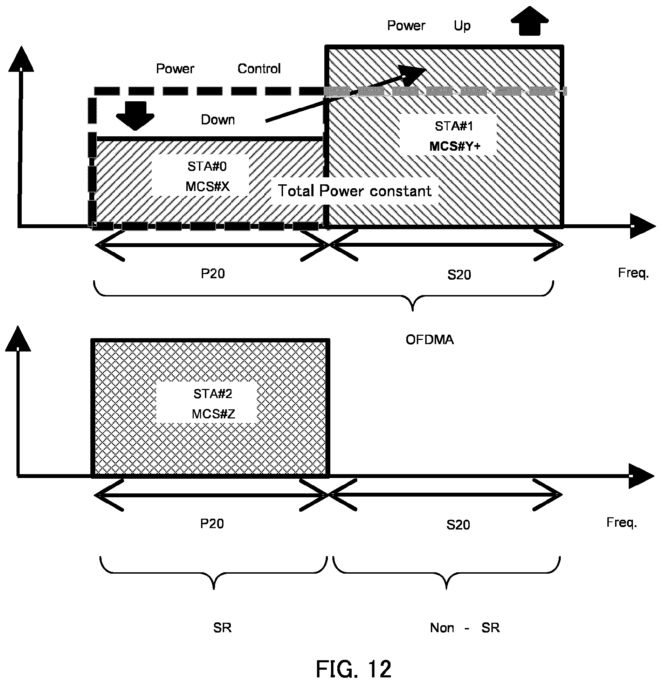

FIG. 12 is a diagram illustrating another example of transmission power control in a case where the SR operation is different for each band. As in another example shown in FIG. 12, the AP may change the transmission power in another band in response to the transmission power change in the SR operation band in which the transmission power control is performed. For example, in a case where the AP reduces the transmission power of a signal to be transmitted in one or some of the bands, the AP may increase the transmission power of a signal to be transmitted in another band, or may adjust the transmission power between bands such that the total transmission power of the signal to be transmitted is constant.

In the example of FIG. 11, AP#0 does not perform transmission power control for the signal to be transmitted in the S20 channel. In contrast, according to the transmission power control example in FIG. 12, regarding a signal to be transmitted in the S20 channel, transmission power of a signal to be transmitted in the S20 channel is increased when transmission power of a signal to be transmitted in the P20 channel (another band) is reduced, which allows for the effective use of the entire transmission power of the transmitter.

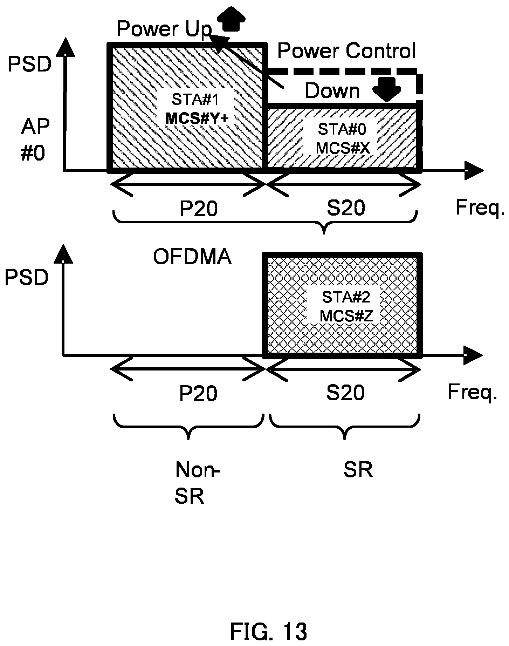

FIG. 13 is a diagram illustrating still another example of transmission power control in a case where the SR operation is different for each band. As in the still another example shown in FIG. 13, the control may be performed by allocating a band to each STA such that the power of the signal to be transmitted in the Primary channel is maximized. As illustrated in FIG. 13, each AP may assign a non-SR operation, in which transmission power control is not performed, to the Primary channel, and assign an SR operation, in which transmission power control is performed, to the Secondary channel.

In FIG. 13, AP#0 transmits a signal to STA#1 by MCS#Y+ in the Primary 20 MHz (P20) channel and transmits a signal to STA#0 by MCS#X in the Secondary 20 MHz (S20) channel.

AP#1 does not transmit a signal in the Primary 20 MHz (P20) channel, but transmits a signal to STA#2 by MCS#Z in the Secondary 20 MHz (S20) channel.

In the example of transmission power control in FIG. 13, AP#0 assigns the SR operation, in which transmission power control is performed, to the S20 channel, and assigns the non-SR operation, in which transmission power control is not performed, to the P20 channel. For the signal to be transmitted in the P20 channel, the transmission power is increased in the case where the transmission power is reduced by the transmission power control when a signal is transmitted in the S20 channel (another band).

In the transmission power control example in FIG. 12, the power of the signal transmitted in the Secondary channel is greater than the power of the signal transmitted in the Primary channel, but according to the transmission power control example in FIG. 13, the performance of receiving the preamble transmitted in the Primary channel is improved by increasing the transmission power of the signal transmitted in the Primary channel of AP#0, thereby improving the throughput.

As described above, according to Embodiment 2, the AP can select a higher MCS by performing transmission power control corresponding to whether an SR operation s performed for each band, thereby improving the system throughput of the communication system.

(Embodiment 3)

In Embodiment 3, AP determines whether to perform transmission power control, in accordance with the Beamformed configuration for each band, as an example of performing different transmission power control for each band.

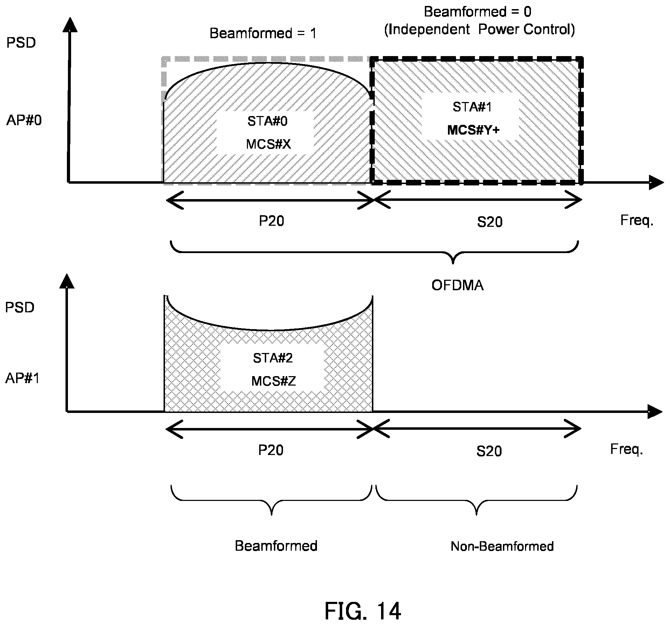

FIG. 14 is a diagram illustrating an example of transmission power control in a case where the Beamformed operation is different for each band. In FIG. 14, AP#0 performs OFDMA multiplexing with the P20 channel and the S20 channel, and allocates the P20 channel to STA#0 and the S20 channel to STA#1. FIG. 14 illustrates an example in which a Beamformed operation is performed in the P20 channel so that interference to STA#2, which is under AP#1, is suppressed, and a Non-Beamformed operation is configured in the S20 channel.

An example is illustrated in which AP#1 allocates the P20 channel to STA#2 while AP#1 performs a Beamformed operation so that interference to STA#0, which is under AP#0, is suppressed.

In the P20 channel, AP#0 and AP#1 control signal power of the transmission signals to STA#0 and STA#2, which are under AP#0 and AP#1, respectively, so that interference to STA#2 under AP#1 and STA#0 under AP#0 are respectively suppressed. However, exemplarily, the transmission power control of the signal transmitted in the S20 channel by AP#0 is independent of the transmission power control of the signal transmitted in the P20 channel, and no transmission power control is performed.

As in Embodiments 1 and 2, the AP may change the transmission power of a signal transmitted in another band according to the Beamformed operation band. For example, in a case where the AP reduces the transmission power of a signal transmitted by the Beamformed operation in one or some of the bands, the AP may increase the transmission power of a signal transmitted in another band, or may adjust the transmission power between the bands such that the total transmission power of the signal to be transmitted is constant. Further, performing/not performing of the Beamformed operation may be controlled such that the power of the signal transmitted in the Primary channel is maximized.

As described above, by performing transmission power control independently for each band corresponding to Beamformed or Non-Beamformed for each band, it is possible to select a higher MCS, thereby improving the throughput of the communication system.

(Embodiment 4)

In Embodiment 4, performing/not performing of transmission power control for each band is indicated by Management frames.

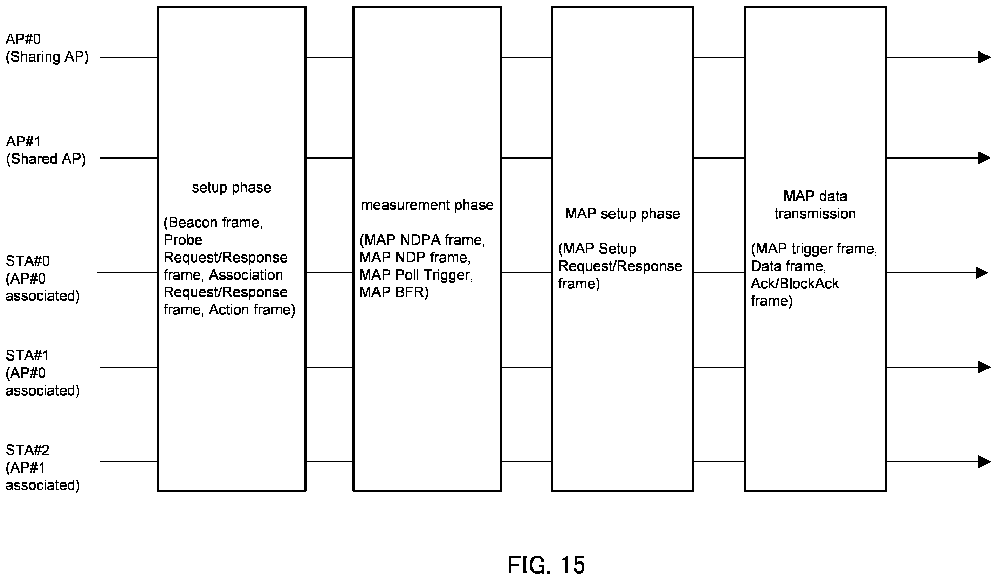

FIG. 15 is a diagram illustrating an overall sequence related to MAP communication. As illustrated in FIG. 15, the overall sequence is divided into the following four phases. The definitions of these phases are merely examples and may be defined in classifications other than these. Further, the order of the phases may be changed, such as performing the setup phase after the measurement phase.

In the setup phase, management information is exchanged between nodes (AP, STA) using Management frames such as a Beacon frame, Probe Request/Response frame, Association Request/Response frame, and Action frame.

In the measurement phase, instructions to measure Channel State Information (CSI) or the like, measurements, and feedback collection are performed between Nodes using Control frames such as a MAP Null data PPDU (physical layer protocol data unit) Announcement (NDPA) frame, MAP NDP frame, MAP Poll Trigger, and MAP Beamforming Report (BFR).

In the MAP setup phase, a frame (such as MAP Setup Request/Response frame) for setting up the MAP is exchanged.

In the MAP data transmission, MAP data is transmitted. A MAP trigger frame that triggers MAP data transmission, a Data frame for data transmission, and an Ack/BlockAck frame are transmitted and received between Nodes.

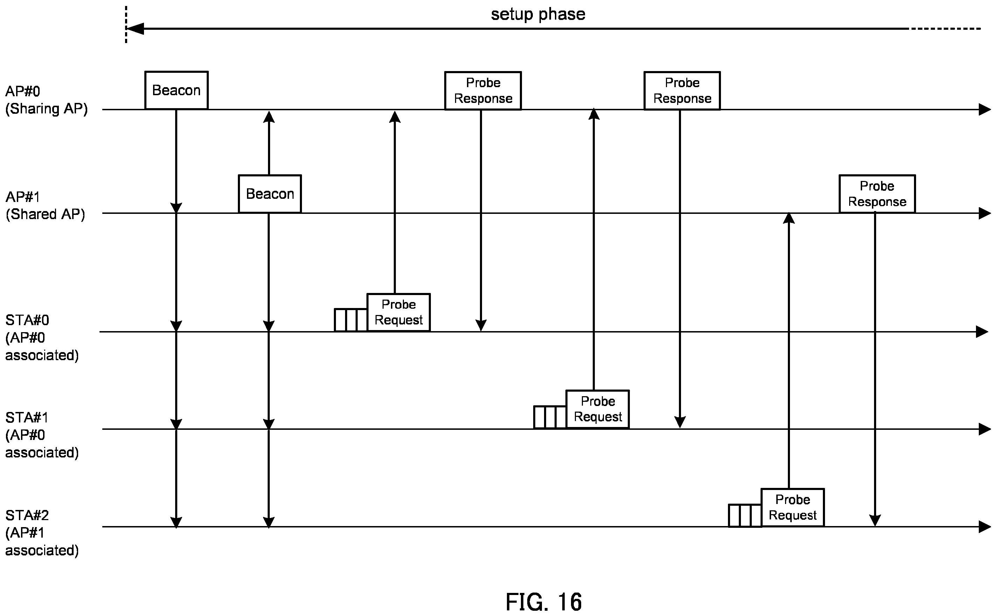

FIGS. 16 to 20 are diagrams illustrating examples of frame transmission and reception in respective phases.

FIG. 16 illustrates an example of transmission and reception of a Beacon frame and Probe Request/Response frames in the setup phase.

The beacon frame is a frame transmitted from an AP (AP#0, AP#1) to indicate broadcast information.

The Probe Request/Response frames are request/response frames for inquiring about the presence or absence of an AP from an STA.

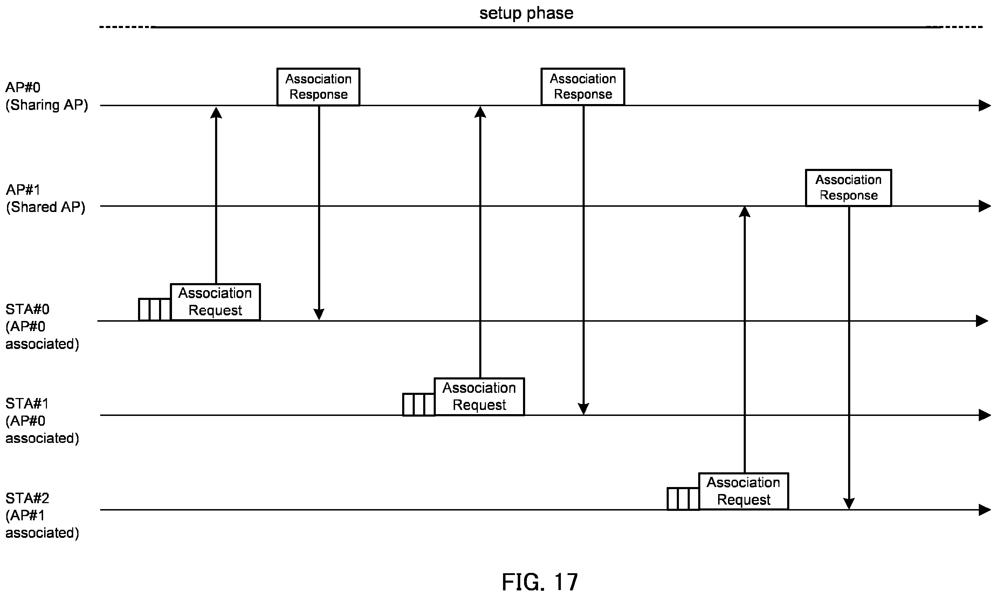

FIG. 17 is a diagram illustrating an example of transmission and reception of Association Request/Response frames in the setup phase.

The Association Request/Response frames are frames in which an STA requests/responds to an AP for a connection relationship.

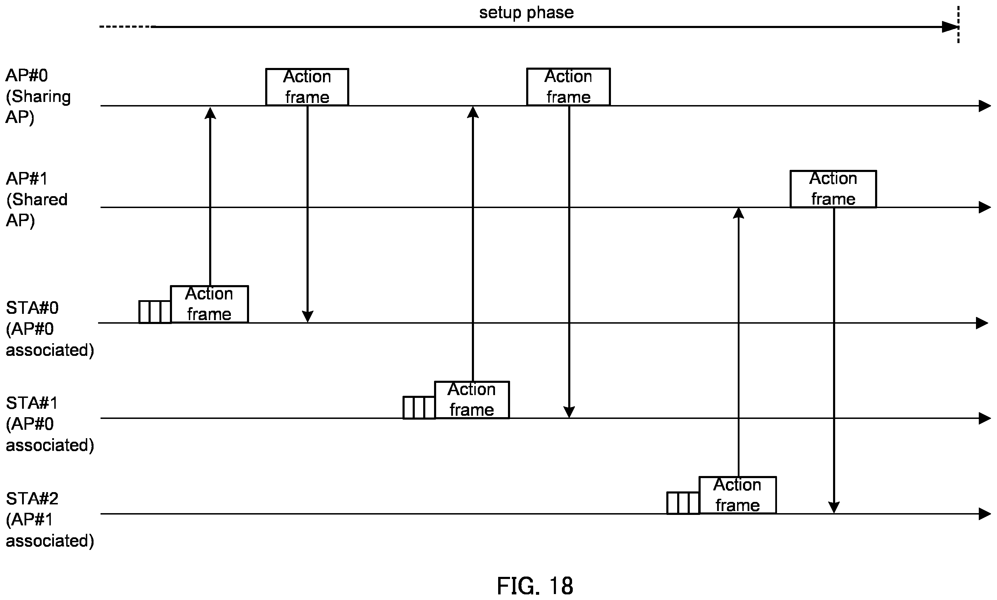

FIG. 18 is a diagram illustrating an example of transmission and reception of an Action frame in the setup phase.

The Action frame is a frame used for exchanging various information between Nodes.

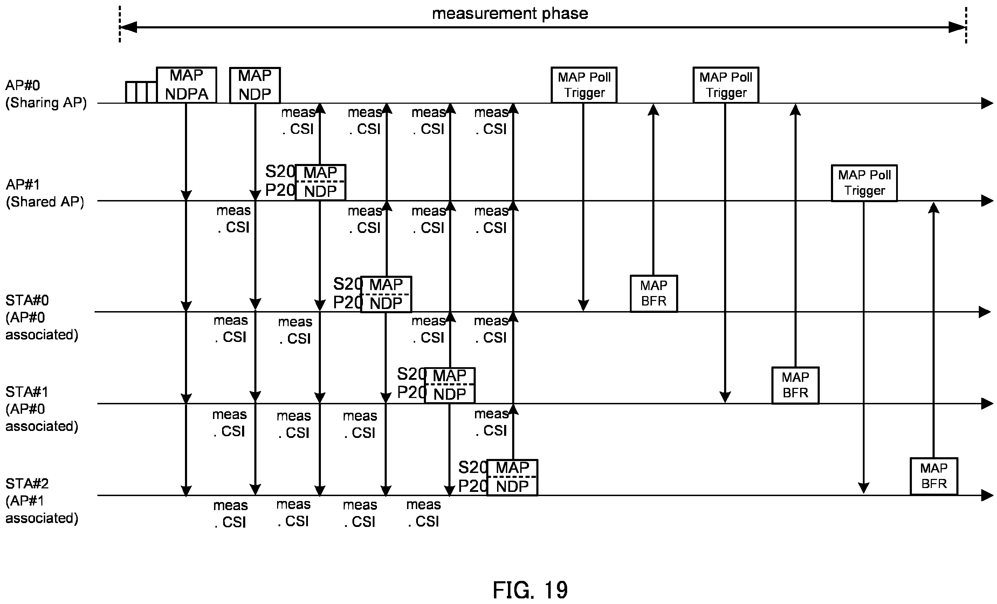

FIG. 19 is a diagram illustrating an example of transmission and reception of Control frames such as a MAP NDPA frame, a MAP NDP frame, a MAP Poll Trigger, and a MAP BFR in the measurement phase.

The MAP NDPA frame is a frame that instructs to measure CSI and specifies feedback information.

The MAP NDP frame is a frame that is transmitted from a specified Node following the MAP NDPA frame and by which CSI measurement is performed at a separately specified Node. FIG. 19 illustrates an example in which MAP NDP is transmitted to AP#0, AP#1, STA#0, STA#1, and STA#2 in this order, and CSI measurement is performed at each Node. In a case where different MAP schemes are specified for the P20 channel and the S20 channel as in Embodiment 1, AP#0 may indicate that the measurement by the MAP NDP is performed separately for the P20 channel and the S20 channel. In each Node, in addition to CSI, the measurement of Acceptable Receiver Interference Level (ARIL), transmission power, and Received Signal Strength Indicator (RSSI) may be indicated.

In FIG. 19, each AP requests collection by transmitting a MAP Poll Trigger to each STA, and each STA responds with the results measured by STA by a MAP BFR, resulting in the APs collecting the measurement results.

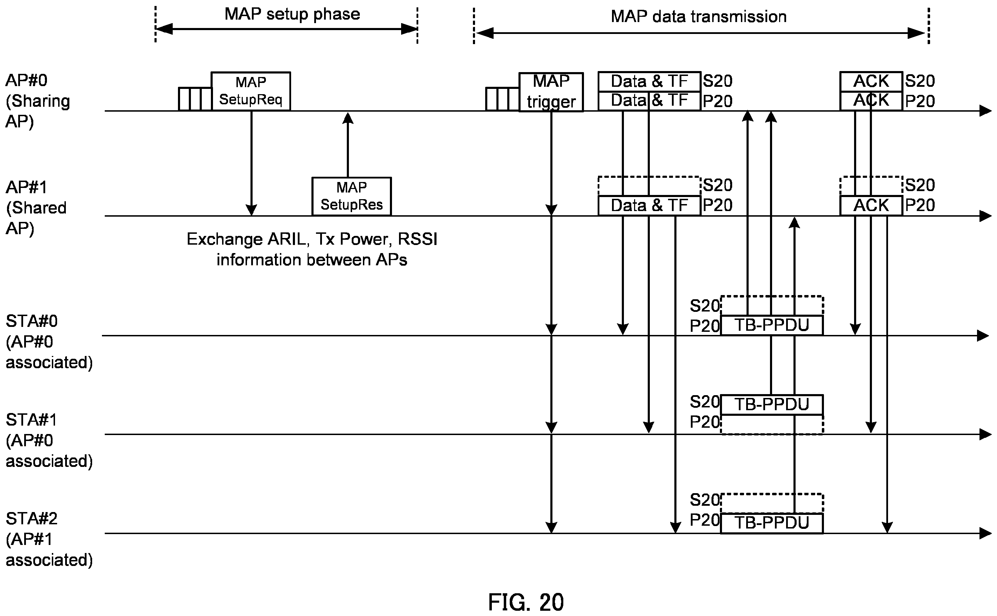

FIG. 20 is a diagram illustrating an example of transmission and reception in a MAP setup phase, which is for setting up on MAP, and in MAP data transmission.

The MAP Setup Request (MAP SetupReq)/MAP Setup Response (MAP SetupRes) frames in the MAP setup phase are frames for exchanging information such as AP setting, ARIL, transmission power, RSSI, CSI, and the like necessary for MAP data transmission, as needed.

The MAP Trigger in MAP data transmission is a frame for indicating data transmission to each AP and exchanging Data and Ack/BlockAck frames.

For Data transmission, an example is illustrated in which, as in FIG. 3 of Embodiment 1, AP#0 transmits and receives signals to and from STA#0 in the P20 channel, AP#0 transmits and receives signals to and from STA#1 in the S20 channel, and AP#1 transmits and receives signals to and from STA#2 in the P20 channel.

In FIGS. 15 to 20, AP#0 is exemplified as a Sharing AP and AP#1 is exemplified as a Shared AP, but the present disclosure is not limited thereto. For example, in the setup phase period, the measurement phase period, and/or the MAP setup phase, the role of each AP (for example, Sharing AP/Shared AP) need not be determined, or operations of the Sharing AP and Shared AP may have no difference from each other (see FIGS. 16 to 18).

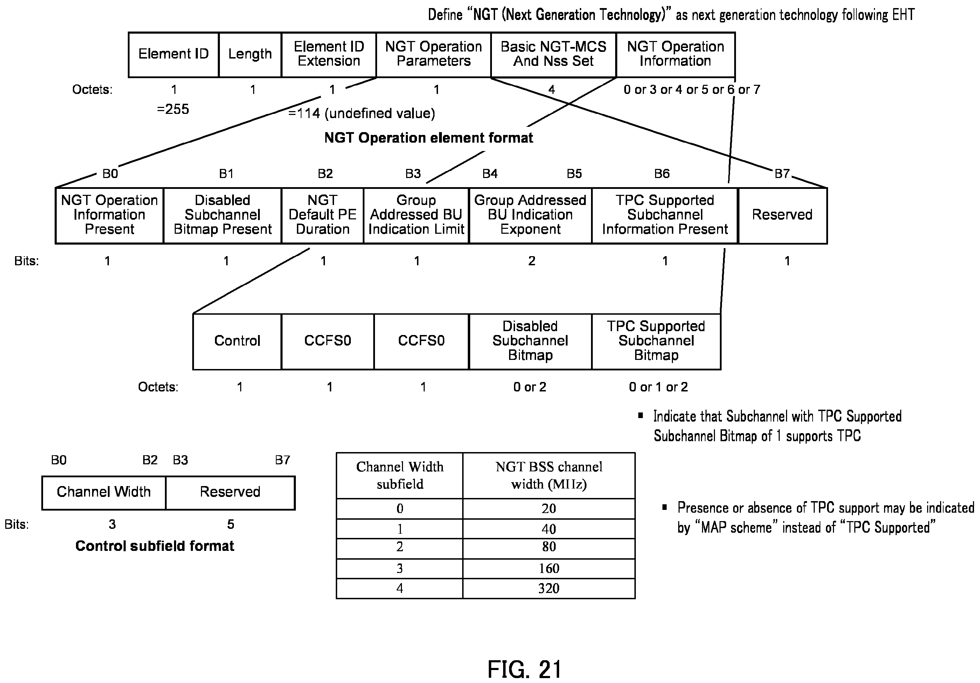

FIGS. 21 to 26 illustrate exemplary configurations in which the presence or absence of TPC support is indicated using elements or frames exchanged between Nodes in the above sequence.

FIG. 21 illustrates an exemplary configuration in which, for indicating the presence or absence of TPC support, a Next Generation Technology (NGT) Operation element is based on the existing EHT operation element.

The term "Next Generation Technology (NGT)" means a next generation for the existing EHT, and may be referred to by another name.

The NGT Operation element includes Element ID defined as 255, Element ID Extension defined as 114, NGT Operation Parameters, and NGT Operation Information. Descriptions of the fields defined in the EHT Operation element are omitted. Element ID=255 indicates a configuration including Element ID Extension, and the Element ID Extension is set to a value indicating a Next Generation Technology (NGT) Operation element (for example, one of the undefined values in the conventional standard, for example, 114). Element ID Extension=114 indicates that the element is an NGT Operation element. Element ID Extension=114 is defined as an NGT Operation element. In order to define the NGT Operation element, a value other than 114 may be used for the Element ID Extension. The NGT Operation Parameters include NGT Operation Information Present and TPC Supported Subchannel Information Present.

The NGT Operation Information Present indicates whether the NGT Operation Information field is present. The TPC Supported Subchannel Information Present indicates whether the TPC Supported Subchannel Bitmap field is present. In a case where the presence of the NGT Operation Information field is indicated by the NGT Operation Information Present and the presence of the TPC Supported Subchannel Bitmap field is further indicated by the TPC Supported Subchannel Information Present, the NGT Operation Information includes the TPC Supported Subchannel Bitmap.

The TPC Supported Subchannel Bitmap indicates whether each Subchannel supports TPC in units of a band. For example, Bitmap "1" indicates that the corresponding Subchannel supports TPC. Bitmap "0" may indicate that the corresponding Subchannel supports TPC. Instead of directly indicating whether to support TPC, the presence or absence of TPC support may be indicated by another means, and for example, the presence or absence of TPC support may be indicated by indicating a MAP scheme.

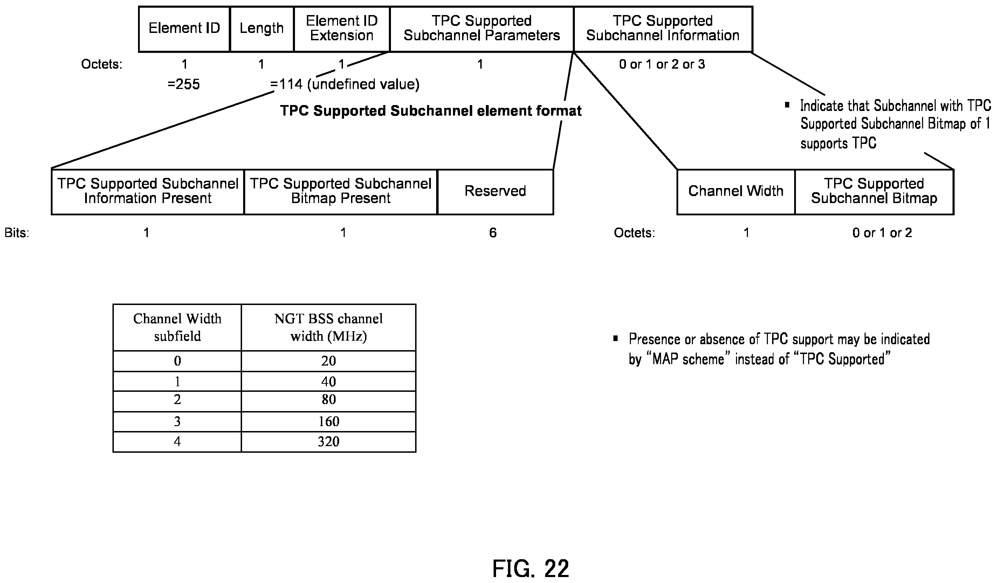

FIG. 22 illustrates an exemplary configuration in which, for indicating the presence or absence of TPC support, a new element is defined with a configuration similar to that of the EHT Operation element as a TPC Supported Subchannel element.

The TPC Supported Subchannel element includes Element ID defined as 255, Element ID Extension defined as 114, TPC Supported Subchannel Parameters, and TPC Supported Subchannel Information. The fields defined in the EHT Operation element are omitted from the description. Element ID=255 indicates a configuration including Element ID Extension, and the Element ID Extension is set to an undefined value in the conventional standard, for example, 114. Element ID Extension=114 indicates that the element is a TPC Supported Subchannel element. Element ID Extension=114 is defined as a TPC Supported Subchannel element. To define the TPC Supported Subchannel element, a value other than 114 may be used for the Element ID Extension. TPC Supported Subchannel Parameters includes TPC Supported Subchannel Information Present and TPC Supported Subchannel Bitmap Present.

TPC Supported Subchannel Information Present indicates whether the TPC Supported Subchannel Information field is present. TPC Supported Subchannel Bitmap Present indicates whether a TPC Supported Subchannel Bitmap is present. In a case where the presence of the TPC Supported Subchannel Information field is indicated by the TPC Supported Subchannel Information Present, and further, the presence of the TPC Supported Subchannel Bitmap is indicated by the TPC Supported Subchannel Bitmap Present, the TPC Supported Subchannel Information includes the Channel Width and the TPC Supported Subchannel Bitmap.

The TPC Supported Subchannel Bitmap indicates whether each Subchannel supports TPC in units of Channel Width. Bitmap "1" indicates that the corresponding Subchannel supports TPC. Bitmap "0" may indicate that the corresponding Subchannel supports TPC. Instead of directly indicating whether to support TPC, the presence or absence of TPC support may be indicated by another means, and for example, the presence or absence of TPC support may be indicated by indicating a MAP scheme.

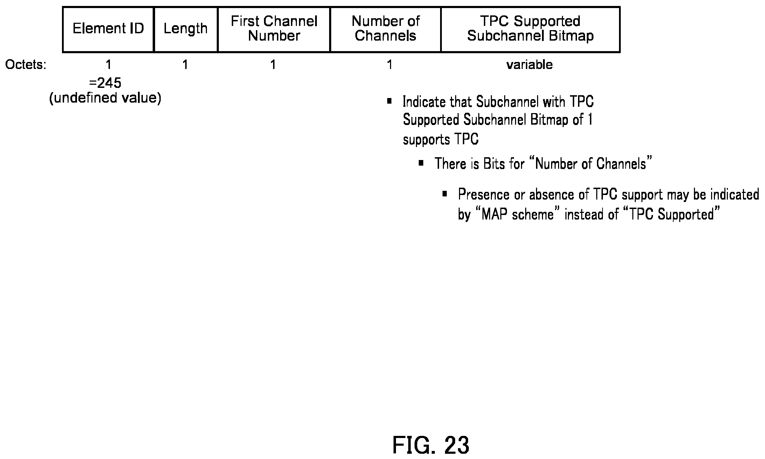

FIG. 23 illustrates an exemplary configuration in which, for indicating the presence or absence of TPC support, a new element is defined with a configuration similar to that of the Supported Channels element as a TPC Supported Subchannel element.

The TPC Supported Subchannel element includes Element ID defined as 245, First Channel Number, Number of Channels, and TPC Supported Subchannel Bitmap. The Element ID is set to an undefined value in the conventional standard, for example, 245, to indicate that the element is a TPC Supported Subchannel element. Element ID=245 indicates that the element is a TPC Supported Subchannel element. Element ID=245 is defined as a TPC Supported Subchannel element. To define a TPC Supported Subchannel element, a value other than 245 may be used for the Element ID.

The First Channel Number indicates the first channel number in the supported subband. The Number of Channels indicates the number of channels.

The TPC Supported Subchannel Bitmap includes bits for the Number of Channels, and indicating whether each channel supports TPC. Bitmap "1" indicates that the corresponding Subchannel supports TPC. Bitmap "0" may indicate that the corresponding Subchannel supports TPC. Instead of directly indicating whether to support TPC, the presence or absence of TPC support may be indicated by another means, and for example, the presence or absence of TPC support may be indicated by indicating a MAP scheme.

The elements illustrated in FIGS. 21 to 23 may be included in Management frames such as Beacon, Association Request, and Probe Request frames, as necessary for indication. Further, TPC support may be indicated in a phase other than the setup phase.

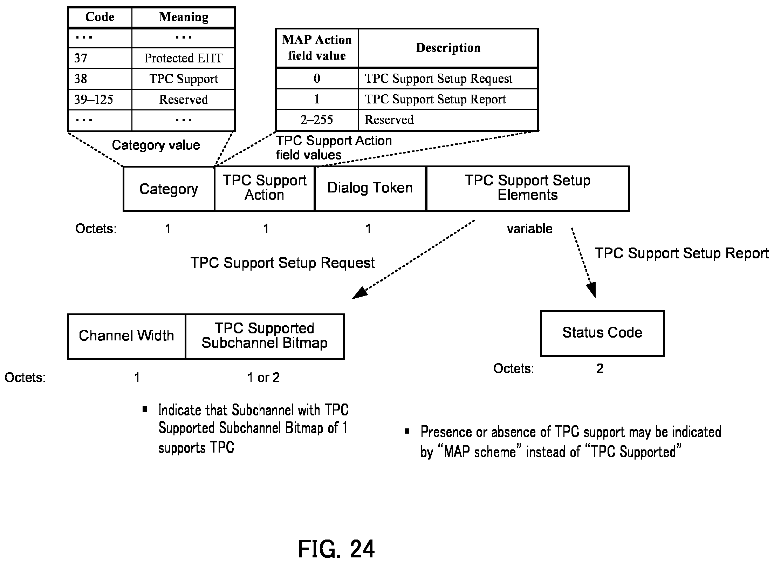

FIGS. 24 to 26 illustrates exemplary configurations in which TPC support is defined by an Action frame.

FIG. 24 illustrates an exemplary configuration in which an Action frame of a new Category is defined as a TPC Support Action frame.

The TPC Support Action Frame includes Category in which Code=38 is configured, TPC Support Action, and TPC Support Setup Elements. The Code of the Category in the Action frame is set to an undefined value in the conventional standard, for example, 38, to indicate that the frame is a TPC Support Action frame. Code=38 of the Category indicates that the frame is a TPC Support Action frame. Code=38 of the Category is defined that the frame is a TPC Support Action frame. To define a TPC Support Action frame, a value other than 38 may be used for the Code.

In the TPC Support Action, for example, TPC Support Setup Request for requesting configuration of TPC Support and TPC Support Setup Report for responding to the configuration request is defined depending on the MAP Action field value. The MAP Action field value=0 may be defined as a TPC Support Setup Request, and the MAP Action field value=1 may be defined as a TPC Support Setup Report. For defining the TPC Support Setup Request and the TPC Support Setup Report, other values may be used for the MAP Action field value.

In the case of the TPC Support Setup Request, the TPC Support Setup Elements include Channel Width and TPC Supported Subchannel Bitmap. The TPC Support Setup Elements may be composed of the Channel Width and the TPC Supported Subchannel Bitmap.

The TPC Supported Subchannel Bitmap indicates whether each Subchannel supports TPC in units of Channel Width. Bitmap "1" indicates that the corresponding Subchannel supports TPC. Bitmap "0" may indicate that the corresponding Subchannel supports TPC. Instead of directly indicating whether to support TPC, the presence or absence of TPC support may be indicated by another means, and for example, the presence or absence of TPC support may be indicated by a MAP scheme.

In the case of a TPC Support Setup Report, the TPC Support Setup Elements include a Status Code.

The Status Code indicates whether the configuration request has succeeded.

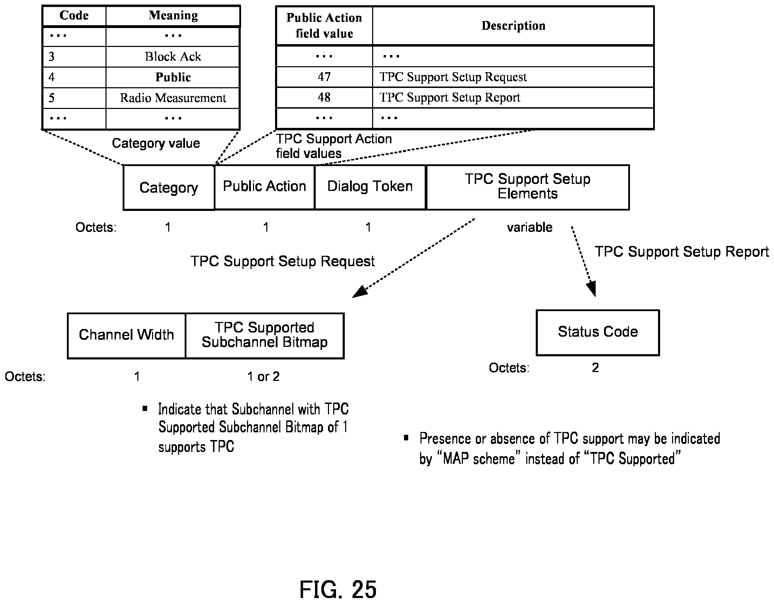

FIG. 25 illustrates an exemplary configuration in which a TPC support Action frame is defined as one of Public Action frames.

The Public Action frame includes Category for which Code=4 is configured, Public Action for which Public Action field value=47 or 48 is configured, and TPC support Setup Elements. The Code of the Category is set to Public (= 4), and the Public Action field value is set to an undefined value in the conventional standard, for example, 47 to indicate a TPC Support Setup Request, and 48 to indicate a TPC Support Setup Report. Public Action=47 indicates TPC Support Setup Request, and Public Action=48 indicates TPC Support Setup Report. Public Action=47 is defined as TPC Support Setup Request, and Public Action=48 is defined as TPC Support Setup Report. Other values may be defined as the Public Action field values.

In the case of the TPC Support Setup Request, the TPC Support Setup Elements include Channel Width and TPC Supported Subchannel Bitmap. The TPC Support Setup Elements may be composed of Channel Width and TPC Supported Subchannel Bitmap.

The TPC Supported Subchannel Bitmap indicates whether each Subchannel supports TPC in units of Channel Width. Bitmap "1" indicates that the corresponding Subchannel supports TPC. Bitmap "0" may indicate that the corresponding Subchannel supports TPC. Instead of directly indicating whether to support TPC, the presence or absence of TPC support may be indicated by another means, and for example, the presence or absence of TPC support may be indicated by a MAP scheme.

In the case of a TPC Support Setup Report, the TPC Support Setup Elements include a Status Code.

The Status Code indicates whether the configuration request has succeeded.

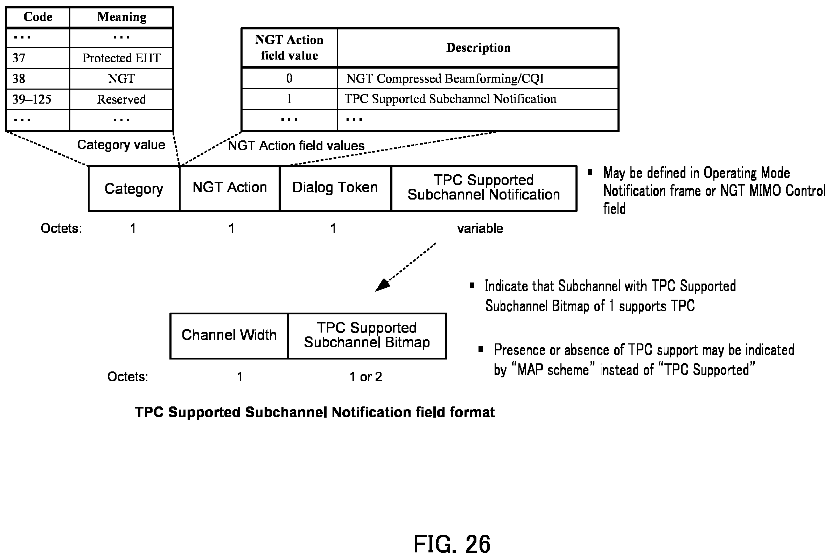

FIG. 26 illustrates an exemplary configuration in which an Action frame of a new Category is defined as an NGT Action frame, and further, the value of the NGT Action field is defined as a TPC Supported Subchannel Notification frame.

The NGT Action frame includes Category in which Code=38 is configured, NGT Action in which NGT Action field value=1 is configured, and TPC Supported Subchannel Notification. The Code of the Category is set to an undefined value in the conventional standard, for example, 38, to indicate the NGT Action frame. Code=38 of the Category indicates that the frame is an NGT Action frame. Code=38 of Category is defined as an NGT Action frame. Another value may be defined for the Code of the Category.

In a case where the Category is NGT (Code = 38), for example, NGT Action field value=1 in the NGT Action indicates TPC Supported Subchannel Notification for indicating TPC Support. NGT Action field value=1 is defined as TPC Supported Subchannel Notification. The TPC Supported Subchannel Notification includes Channel Width and TPC Supported Subchannel Bitmap. The TPC Supported Subchannel Notification may be composed of Channel Width and TPC Supported Subchannel Bitmap.

The TPC Supported Subchannel Bitmap indicates whether each Subchannel supports TPC in units of Channel Width. Bitmap "1" indicates that the corresponding Subchannel supports TPC. Bitmap "0" may indicate that the corresponding Subchannel supports TPC. Instead of directly indicating whether to support TPC, the presence or absence of TPC support may be indicated by another means, and for example, the presence or absence of TPC support may be indicated by a MAP scheme.

Examples have been described with reference to FIGS. 24 to 26 in which TPC Support Setup Elements or TPC Supported Subchannel Notification is defined in the NGT Action, but these elements may also be defined in the Operating Mode Notification frame or the NGT MIMO Control field. They may be defined in another Management frame. Further, the names may be other than TPC Support Setup Elements or TPC Supported Subchannel Notification.

According to Embodiment 4, indicating in Management frames whether transmission power control is performed for each band makes it possible to select higher MCS and improve system throughput.

(Embodiment 5)

Embodiment 5 defines a Capability of presence or absence of reception support for a transmission power difference between bands.

In performing the transmission power control described in Embodiments 1 to 3, the capability definition in Embodiment 5 can be used. Further, in using the indication described in Embodiment 4, the capability definition in Embodiment 5 can be used.

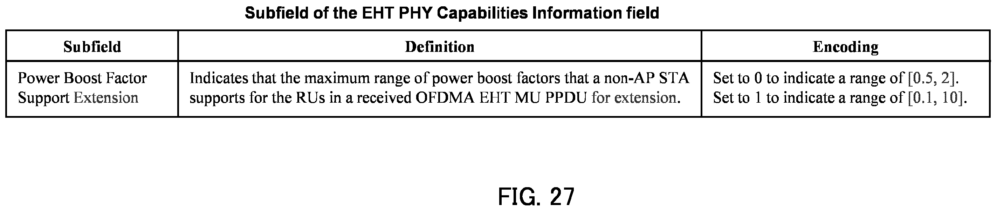

FIG. 27 is a diagram illustrating an exemplary definition of a Subfield in the NGT PHY Capabilities Information field. As shown in FIG. 27, a range beyond the existing range of [0.5, 2] (equivalent to $\pm$ 6 dB), for example, a range of [0.1, 10] (equivalent to $\pm$ 20 dB) is defined as an extension of the Power Boost Factor Support (IEEE P802.11be/D2.0, Table 9-401k). This range is merely an example, and another value may be defined within a range in which reception can be supported. The transmission power difference is limited to $\pm$ 6 dB, assuming OFDMA transmission, but is not sufficient to be used as a Capability of the transmission power difference between bands in a case where a MAP scheme is different, for example. However, according to Embodiment 5, a range exceeding $\pm$ 6 dB, for example, $\pm$ 20 dB, can be defined, and thus, the Node can perform transmission power control independently for each band.

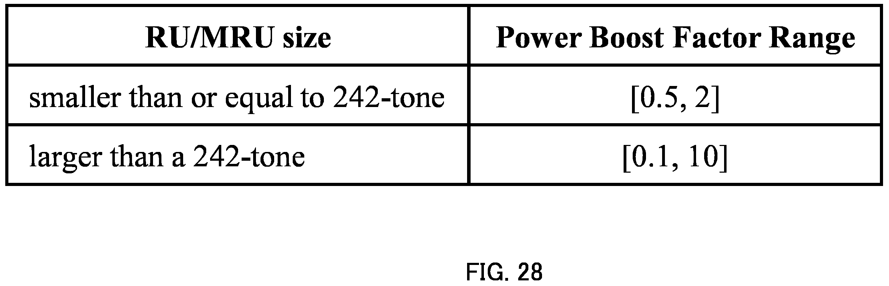

FIG. 28 is a diagram illustrating an exemplary definition in which the range of the transmission power difference is changed depending on the RU size. In a case where the effect of the transmission power difference is small, such as when the RU size is small (for example, 20 MHz or less) as in the example shown in FIG. 28, the range of the transmission power difference may be set to be small (for example, $\pm$ 6 dB). In a case where the effect of the transmission power difference is significant, such as when the RU size is large (for example, 40 MHz or more), the range of the transmission power difference may be set to be large (for example, $\pm$ 20 dB). Note that 242-tone in FIG. 28 is the number of subcarriers for 20 MHz.

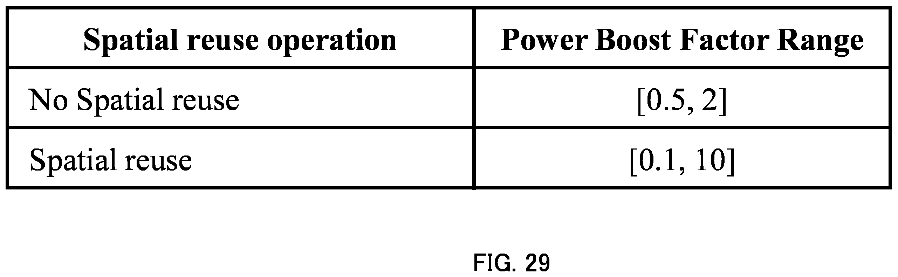

FIG. 29 illustrates an example in which a Capability of a range of a transmission power difference is defined depending on the SR configuration for each band. As in the example illustrated in FIG. 29, a small range (for example, ± 6 dB) of a change in transmission power difference may be configured with an SR configuration, and a large range (for example, ± 20 dB) of a change in transmission power difference may be configured without an SR configuration.

Further, the presence or absence of support for transmission or reception of a transmission power difference between bands may be defined separately from the Capability as a Device Class of a Node.

Information on Capability and Device Class is included in Management frames such as a Beacon frame, Association Request/Response frame, and Probe Request/Response frame, and information exchange is performed between terminals.

According to Embodiment 5, configuration of the transmission power difference between bands corresponding to the Capability of the STA is enabled, which makes it possible to select a high MCS and improve the system throughput.

The transmission power control according to Embodiments 1 to 5 is applicable to both downlink and uplink.

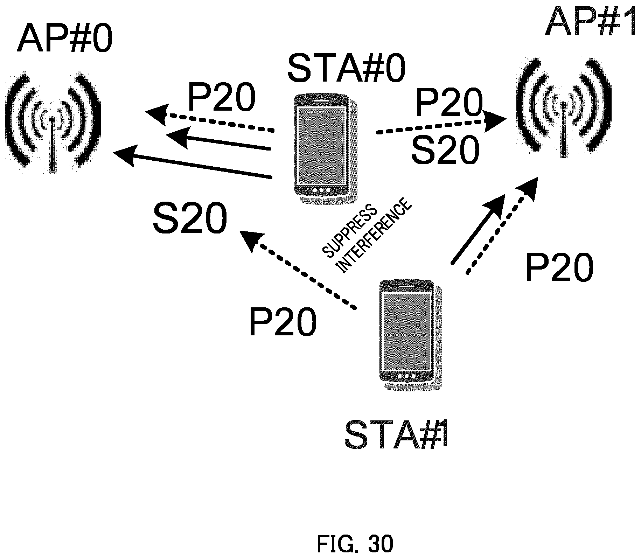

An example in the case of downlink has been described with reference FIG. 1, but the present disclosure can be used for uplink in the same manner as downlink. FIG. 30 is a diagram for describing the case of uplink. FIG. 30 illustrates an example in which STA#0 performs uplink transmission to AP#0 in the P20 channel and the S20 channel, and STA#1 performs uplink transmission to AP#1 in the P20 channel. Here, C-SR is used in the P20 channel, and C-OFDMA is used in the S20 channel.

In the same manner as the transmission power control in the downlink, the STA can perform transmission power control for each band in the uplink. Further, in a case where the STA reduces the transmission power of a signal transmitted in one or some of the bands, the STA can increase the transmission power in another band. Further, the AP can control the assignment of a band and a MAP scheme such that the power of the Primary channel is maximized. Since the AP performs the assignment of a band and a MAP scheme, the AP performs the assignment of a band and a MAP scheme even in a case of uplink where the STA performs the transmission power control.

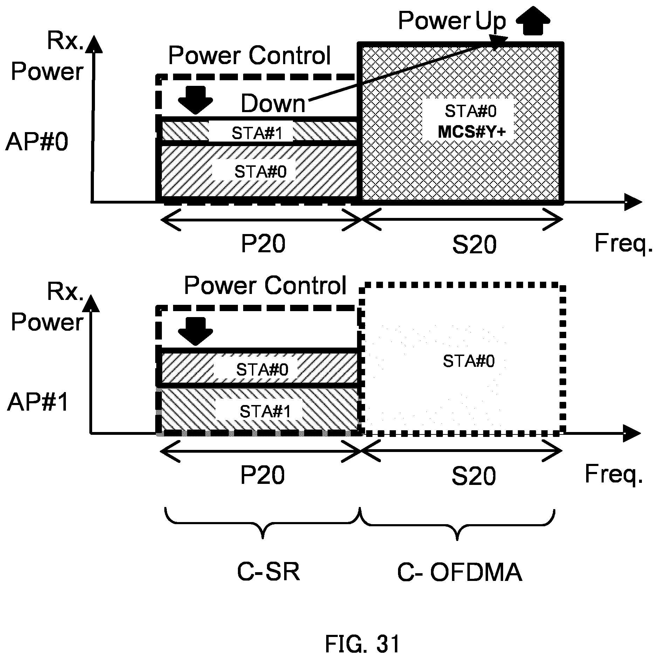

FIG. 31 is a diagram illustrating an example of transmission power control in a case where the MAP scheme is different for each band in the uplink.

In a case where STA#0 and STA#1 reduce the transmission power of the signal transmitted in the P20 channel, STA#0 can increase the transmission power of the signal transmitted in the S20 channel. Thus, while the reception power (interference) of the signal received by AP#0 from STA#1 in the P20 channel and the reception power (interference) of the signal received by AP#1 from STA#0 in the P20 channel decrease, the reception power of the signal received by AP#0 from STA#0 in the S20 channel increases. This makes it possible to select a high MCS for the signal transmitted by STA# in the S20 channel, thereby improving the throughput of the communication system.

Embodiments 1 to 5 can be combined as appropriate. For example, transmission power control can be performed using both the MAP scheme (Embodiment 1) and the presence or absence of SR (Embodiment 2). For example, the indication described in Embodiment 4 can be used in performing transmission power control using the MAP scheme described in Embodiment 1. For example, transmission power control can be performed using both the MAP scheme (Embodiment 1) and the presence or absence of reception support (Embodiment 5). For example, transmission power control can be performed using three methods: the MAP scheme (Embodiment 1); the presence or absence of SR (Embodiment 2); and the presence or absence of reception support (Embodiment 5).

The radio communication system according to the present embodiment may include, for example, a plurality of APs 100 and a plurality of STAs 200. AP 100 may include, for example, both functions of Sharing AP and Shared AP, or may include either of the functions.

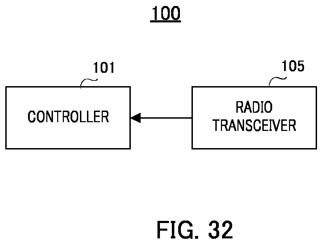

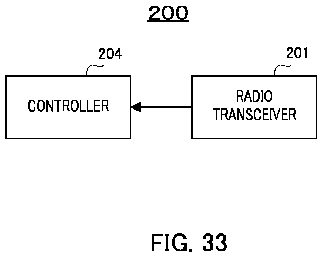

FIG. 32 is a block diagram illustrating an exemplary configuration of a part of AP 100 according to an embodiment of the present disclosure. FIG. 33 is a block diagram illustrating an exemplary configuration of a part of STA 200 according to an embodiment of the present disclosure.

AP 100 illustrated in FIG. 32 is an exemplary communication apparatus. In AP 100 illustrated in FIG. 32, radio transceiver 105 (for example, corresponding to transmission/reception circuitry) transmits a frame to another communication apparatus (for example, STA 200) and receives a frame from another communication apparatus (for example, STA 200). Controller 101 (for example, corresponding to control circuitry) controls coordinated communication (for example, controls transmission power) based on the MAP scheme of the frame.

STA200 illustrated in FIG. 33 is an exemplary communication apparatus. In STA 200 illustrated in FIG. 33, controller 204 (for example, corresponding to control circuitry) receives frames from a plurality of other communication apparatuses (for example, AP 100) and controls coordinated communication (for example, controls transmission power).

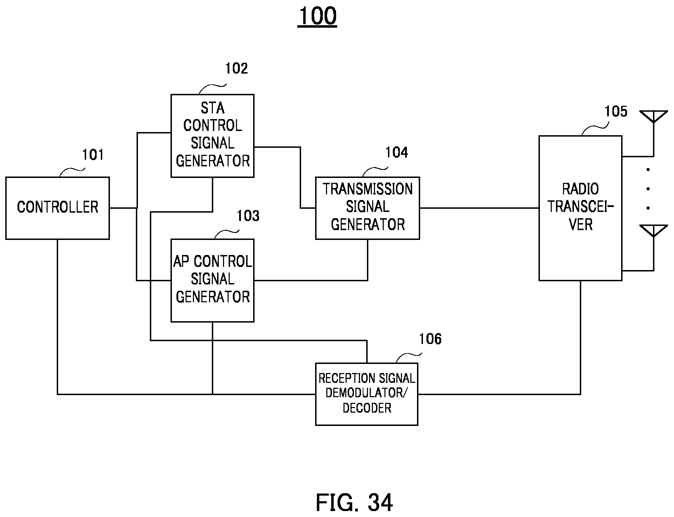

FIG. 34 is a block diagram illustrating an exemplary configuration of AP 100 according to Embodiment 1. AP 100 illustrated in FIG. 34 may include, for example, controller 101, STA control signal generator 102, AP control signal generator 103, transmission signal generator 104, radio transceiver 105, and reception signal demodulator/decoder 106.

Controller 101 may control a configuration of a transmission frame (or signal) including, for example, a MAP Trigger frame. For example, when AP 100 is Sharing AP, controller 101 may control generation of a control signal (e.g.,

MAP Trigger frame) for another AP 100 (e.g., Shared AP).

Note that the transmission frame may be a transmission frame having any one of the frame configurations described above.

Further, controller 101 may configure control information for STA 200 or another AP 100, for example. For example, controller 101 may configure resource allocation information for each STA 200 and scheduling information such as MCS. Controller 101 may also determine a parameter related to transmission control (e.g., control of coordinated communication) (e.g., parameter related to coordinated communication) based on, for example, information inputted from reception signal demodulator/decoder 106 (e.g., control information indicated from Sharing AP to Shared AP). Controller 101 may, for example, output the control information including the determined transmission control parameter to STA control signal generator 102 and AP control signal generator 103.

Further, controller 101 may control, for example, coordinated communication for STA200. For example, controller 101 controls, for STA200, transmission of configuration information on the configuration of coordinated communication. The configuration information may include information used for an event report (example of feedback information) from STA 200. Further, for example, controller 101 controls, for STA 200, transmission of information (e.g., indication information) requesting an event report from STA200. Furthermore, for example, controller 101 controls, for STA200, transmission of a signal for measurement with which communication quality is measured. Moreover, for example, controller 101 controls switching of MAP schemes based on the event report received from STA 200.

STA control signal generator 102 may generate, for example, a control signal for STA200 (e.g., Trigger frame), and output the generated control signal to transmission signal generator 104. STAcontrol signal generator 102 may also generate various signals for STA 200 under the control of controller 101, and may output the generated signals to transmission signal generator 104.

AP control signal generator 103 may, for example, generate a control signal (e.g., MAP Trigger frame) for AP 100. For example, AP control signal generator 103 may generate a control signal based on the control information inputted from controller 101 and the information inputted from reception signal demodulator/decoder 106.

Transmission signal generator 104 may, for example, perform transmission processing on the control signal inputted from STA control signal generator 102 or AP control signal generator 103 or on data and an acknowledgement (ACK) / negative-acknowledgement (NACK), and may generate a radio frame (transmission signal). Transmission signal generator 104 outputs the generated transmission signal to radio transceiver 105.

Radio transceiver 105, for example, performs radio transmission processing, such as digital/analog (D/A) conversion or up-conversion to a carrier frequency, on the transmission signal inputted from transmission signal generator 104, and transmits the signal after the radio transmission processing via an antenna.

When AP 100 receives an uplink signal transmitted from STA 200 or a control signal transmitted from another AP 100, AP 100 may, for example, operate as described below.

The radio signal received via an antenna is inputted to radio transceiver 105. Radio transceiver 105, for example, performs radio reception processing such as down-conversion of a carrier frequency on the received radio signal, and outputs the signal after the radio reception processing to reception signal demodulator/decoder 106.

For example, reception signal demodulator/decoder 106 may perform processing such as autocorrelation processing on the signal inputted from radio transceiver 105, and extract the received radio frame. Further, reception signal demodulator/decoder 106 may, for example, decode and demodulate an uplink signal (e.g., response signal or feedback information) from STA 200 or a control signal (e.g., MAP Trigger frame) from another AP 100 included in the extracted radio frame. Reception signal demodulator/decoder 106 may, for example, output the control signal after demodulation to controller 101, STA control signal generator 102, and AP control signal generator 103.

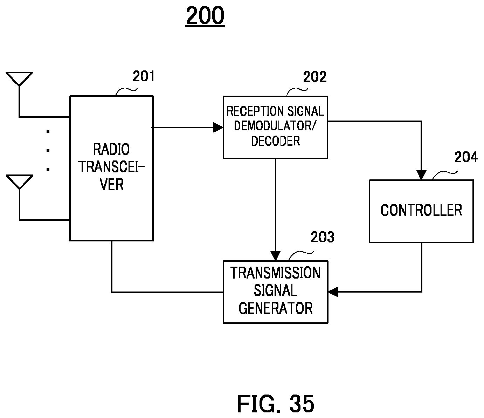

FIG. 35 is a block diagram illustrating an exemplary configuration of STA 200 according to Embodiment 1. STA 200 illustrated in FIG. 35 may include, for example, radio transceiver 201, reception signal demodulator/decoder 202, transmission signal generator 203, and controller 204.

Radio transceiver 201, for example, receives a signal transmitted from AP 100 via an antenna, performs radio reception processing such as down-conversion or analog/digital (A/D) conversion on the received signal, and outputs the signal after the radio reception processing to reception signal demodulator/decoder 202. Further, radio transceiver 201 may, for example, perform radio transmission processing such as D/A conversion and up-conversion to a carrier frequency on the signal inputted from transmission signal generator 203, and transmit the signal after the radio transmission processing via an antenna.

For example, reception signal demodulator/decoder 202 may perform processing such as autocorrelation processing on the signal inputted from radio transceiver 201, and extract the received radio frame. Reception signal demodulator/decoder 202 may, for example, demodulate and decode a control signal (e.g., Trigger frame) included in the extracted radio frame, and obtain an uplink transmission control parameter. Reception signal demodulator/decoder 202 may, for example, output the obtained uplink transmission control parameter to transmission signal generator 203.

Reception signal demodulator/decoder 202 outputs the received signal (e.g., NDP) to controller 204.

Transmission signal generator 203 may perform transmission signal processing on an uplink signal (e.g., signal including feedback information) based on the uplink transmission control parameter inputted from reception signal demodulator/decoder 202, and generate a radio frame (transmission signal). Transmission signal generator 203, for example, outputs the generated transmission signal to radio transceiver 201.

Controller 204 controls coordinated communication (e.g., MAP coordination Scheme), for example. For example, controller 204 may measures a measurement value such as CSI and/or RSSI based on the received signal (e.g., NDP). Controller 204 generates feedback information on switching of MAP schemes based on the measurement value.

(Other Embodiments)

Note that, in each of the above-described embodiments, an exemplary configuration of each frame has been described, but the information to be indicated is not limited to the information described in the above embodiments, and for example, another information may be added or at least some pieces of the defined information may be deleted.

Further, the configurations of the frame, element, field, subfield, and the like in the above-described embodiments are merely examples, and the present disclosure is not limited to the above-described examples. For example, at least one element may be omitted in the above-described frame configuration, or an element not included in the above-described frame configuration may be included in the configuration.

Further, in each of the above-described embodiments, AP indicating coordinated communication and AP to which coordinated communication is indicated have been described by the term "Sharing AP" and "Shared AP," respectively, but the present disclosure is not limited thereto, and other terms may be used.

Further, although a description has been given based on the IEEE 802.11be format as a non-limiting example in each of the above-described embodiments, a format to which an embodiment of the present disclosure can be applied is not limited to the IEEE 802.11be format. An embodiment of the present disclosure may be applied to, for example, IEEE 802.11bd (Next Generation V2X (NGV)), which is a next generation standard from an on-vehicle standard of IEEE 802.11p.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

The technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include a radio frequency (RF) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to an embodiment of the present disclosure includes: control circuitry, which, in operation, performs independent transmission power control for each band of a plurality of bands; and transmission/reception circuitry, which, in operation, transmits a signal using the plurality of bands.

In the embodiment of the present disclosure, the control circuitry performs transmission power control corresponding to a MAP (Multi Access Point) Scheme for each band.

In the embodiment of the present disclosure, transmission power control corresponding to the presence or absence of a spatial reuse (SR) operation for each band is performed.

In the embodiment of the present disclosure, transmission power control corresponding to the configuration of Beamformed for each band is performed.

In the embodiment of the present disclosure, whether transmission power control is performed for each band is indicated using a Management frame.

In the embodiment of the present disclosure, the Management frame is a Beacon, Association Request/Response, Probe Request/Response, or Action frame.

In the embodiment of the present disclosure, the control circuitry performs the transmission power control depending on the presence or absence of reception support for a transmission power difference in terminals.

In the embodiment of the present disclosure, the presence or absence of the reception support is defined by a Capability included in a Beacon, Association Request/Response, Probe Request/Response, or Action frame.

A communication method according to an embodiment of the present disclosure includes: performing independent transmission power control for each band of a plurality of bands; and transmitting a signal using the plurality of bands.

The disclosure of Japanese Patent Application No. 2022-115606, filed on July 20, 2022, including the specification, drawings and abstract, is incorporated herein by reference in its entirety.

Industrial Applicability

An embodiment of the present disclosure is useful for radio communication systems.

Reference Signs List

100 AP
101, 204 Controller
102 STA control signal generator
103 AP control signal generator
104, 203 Transmission signal generator
105, 201 Radio transceiver
106, 202 Reception signal demodulator/decoder
200 STA

**Claims**

1. A communication apparatus, comprising:

   control circuitry, which, in operation, performs transmission power control corresponding to a transmission scheme for each band constituting a plurality of bands; and
   transmission/reception circuitry, which, in operation, transmits a signal using the plurality of bands.

2. The communication apparatus according to claim 1, wherein the transmission scheme is a Multi Access Point (MAP) Scheme.

3. The communication apparatus according to claim 1, wherein the transmission scheme is presence or absence of a spatial reuse (SR) operation.

4. The communication apparatus according to claim 1, wherein the transmission scheme is a Beamformed configuration.

5. The communication apparatus according to claim 1, wherein the transmission/reception circuitry indicates, using a Management frame, whether the transmission power control is performed for each band.

6. The communication apparatus according to claim 5, wherein the Management frame is a Beacon, Association Request/Response, Probe Request/Response, or Action frame.

7. The communication apparatus according to claim 1, wherein the control circuitry performs the transmission power control depending on presence or absence of reception support for a transmission power difference in reception stations.

8. The communication apparatus according to claim 7, wherein the presence or absence of the reception support is defined by a Capability included in a Beacon, Association Request/Response, Probe Request/Response, or Action frame.

9. A communication method, comprising:

performing transmission power control corresponding to a transmission scheme for each band constituting a plurality of bands; and
transmitting a signal using the plurality of bands.

FIG. 1

FIG. 2

FIG. 3

FIG. 4

FIG. 5

Number of APs ▪ Composed of Per AP Info for Number of APs

| Frame Control | Duration | RA | TA | Common Info | Per AP Info | ...... | Per AP Info | Padding | FCS |

| MAP scheme | BW | ...... | MAP scheme Dependent Common Info |

Number of RUs

| Shared AP ID | Resource Allocation | UL/DL Flag | ...... | MAP scheme Dependent Info | ...... | MAP scheme Dependent Info |

| Number of APs | AP#1 | AP#2 | ...... |

| DL Tx Power Gain | UL Tx Power Gain |

C-OFDMA
JT
D-MIMO
CBF

C-SR Type 1-3

No info (No Power Control)

| Number of RUs | RU#1 | RU#2 | ... |

▪ Indicate MAP schemes for all APs in MAP scheme field in Common info
▪ Indicate MAP schemes for plurality of RUs in subfield of each AP

**C-SR Type 1**

| DL ARIL | DL RSSI |

| STA₁ ARIL | ... | STAₙ ARIL | STAₙ₊₁ RSSI | ... | STAₘ RSSI |

**C-SR Type 2**

| UL ARIL | UL RSSI |

| AP₁ ARIL | ... | APₙ ARIL | APₙ₊₁ RSSI | ... | APₘ RSSI |

**C-SR Type 3**

| DL ARIL | UL ARIL | Inter-AP RSSI | Inter-STA RSSI |

| STA₁ ARIL | ... | STAₙ ARIL | AP₁ ARIL | ... | APₙ ARIL | APₙ₊₁ RSSI | ... | APₘ RSSI | STAₙ₊₁ RSSI | ... | STAₘ RSSI |

JT
D-MIMO

| Transmission Parameter |

▪ Composed of MAP scheme Dependent Info for Number of RUs
▪ Composed of elements corresponding to MAP scheme indicated in MAP scheme field

CBF

| STA ID to Suppress | STA Resource Allocation Info to Suppress |

C-OFDMA

| No info |

| index | MAP scheme | MAP scheme Dependent Common Info | MAP scheme Dependent Info |
|---|---|---|---|
| 0 | C-SR Type 1 | DL Tx Power Gain | DL ARIL/RSSI |
| 1 | C-SR Type 2 | UL Tx Power Gain | UL ARIL/RSSI |
| 2 | C-SR Type 3 | DL/UL Tx Power Gain | DL/UL ARIL/RSSI Inter-AP/STA RSSI |
| 3 | C-OFDMA | No info (No Power Control) | No info |
| 4 | JT | | Transmission Parameter |
| 5 | D-MIMO | | |
| 6 | CBF | | STA ID to Suppress, STA Resource Allocation Info to Suppress |
| : | : | : | : |

ARIL: Acceptable Receiver Interference Level

**FIG. 6**

EP 4 561 199 A1

| Frame Control | Duration | RA | TA | Common Info | Per AP Info | ...... | Per AP Info | Padding | FCS |

Number of RUs

| Shared AP ID | MAP scheme | Resource Allocation | UL/DL Flag | ...... | MAP scheme Dependent Info | ...... | MAP scheme Dependent Info |

| Number of RUs | RU#1 | RU#2 | ... |

- Indicate MAP schemes for plurality of RUs in MAP scheme field in Per AP info
  - Composed of MAP scheme Dependent Info for Number of RUs
  - Composed of elements corresponding to MAP scheme indicated in MAP scheme field

C-SR Type 1

| DL ARIL | DL RSSI | DL Tx Power Gain |

| STA₁ ARIL | ... | STAₙ ARIL | STAₙ₊₁ RSSI | ... | STAₘ RSSI |

C-SR Type 2

| UL ARIL | UL RSSI | UL Tx Power Gain |

| AP₁ ARIL | ... | APₙ ARIL | APₙ₊₁ RSSI | ... | APₘ RSSI |

C-SR Type 3

| DL ARIL | UL ARIL | Inter-AP RSSI | Inter-STA RSSI | DL Tx Power Gain | UL Tx Power Gain |

| STA₁ ARIL | ... | STAₙ ARIL | AP₁ ARIL | ... | APₙ ARIL | APₙ₊₁ RSSI | ... | APₘ RSSI | STAₙ₊₁ RSSI | ... | STAₘ RSSI |

JT D-MIMO

| Transmission Parameter |

CBF

| STA ID to Suppress | STA Resource Allocation Info to Suppress |

C-OFDMA

| No info |

| index | MAP scheme | MAP scheme Dependent Info |
|-------|-----------|---------------------------|
| 0 | C-SR Type 1 | DL ARIL/RSSI, DL Tx Power Gain |
| 1 | C-SR Type 2 | UL ARIL/RSSI, UL Tx Power Gain |
| 2 | C-SR Type 3 | DL/UL ARIL/RSSI, Inter-AP/STA RSSI, DL/UL Tx Power Gain |
| 3 | C-OFDMA | No info |
| 4 | JT | Transmission Parameter |
| 5 | D-MIMO | Transmission Parameter |
| 6 | CBF | STA ID to Suppress, STA Resource Allocation Info to Suppress |
| . . . | . . . | . . . |

ARIL: Acceptable Receiver Interference Level

FIG. 7

| Frame Control | Duration | RA | TA | Common Info | Per AP Info | ...... | Per AP Info | Padding | FCS |

Number of STAs

| Number of STAs | ... | MAP scheme List | ... |

| AP ID | Number of RUs | Per STA Info | Per STA Info | ...... |

Number of RUs

| AP#1 | AP#2 | ...... |

| STA ID | MAP scheme Indexes | Resource Allocation | UL/DL Flag | ...... | MAP scheme Dependent Info | ...... | MAP scheme Dependent Info |

| MAP scheme Element 1 | MAP scheme Element 2 | ...... |
=0  =3

Number of RUs

| MAP scheme Index | ...... | MAP scheme Index |

| MAP scheme Element value | MAP scheme Element variant |
|---|---|
| 0 | C-SR Type 1 |
| 1 | C-SR Type 2 |
| 2 | C-SR Type 3 |
| 3 | C-OFDMA |
| 4 | JT |
| 5 | D-MIMO |
| 6 | CBF |
| 7 | Reserved |

| MAP scheme Index value | MAP scheme Index variant |
|---|---|
| 0 | MAP scheme Element 1 |
| 1 | MAP scheme Element 2 |
| ... | ... |

MAP scheme Index variant = 
MAP scheme Element (MAP scheme Index value + 1)

C-SR Type 1

| DL ARIL | DL RSSI | DL Tx Power Gain |

| $STA_1$ ARIL | ... | $STA_N$ ARIL | $STA_{N+1}$ RSSI | ... | $STA_M$ RSSI |

ARIL: Acceptable Receiver Interference Level

C-SR Type 2

| UL ARIL | UL RSSI | UL Tx Power Gain |

| $AP_1$ ARIL | ... | $AP_N$ ARIL | $AP_{N+1}$ RSSI | ... | $AP_M$ RSSI |

C-SR Type 3

| DL ARIL | UL ARIL | Inter-AP RSSI | Inter-STA RSSI | DL Tx Power Gain | UL Tx Power Gain |

| $STA_1$ ARIL | ... | $STA_N$ ARIL | $AP_1$ ARIL | ... | $AP_N$ ARIL | $AP_{N+1}$ RSSI | ... | $AP_M$ RSSI | $STA_{N+1}$ RSSI | ... | $STA_M$ RSSI |

ARIL: Acceptable Receiver Interference Level

JT D-MIMO

| Transmission Parameter |

CBF

| STA ID to Suppress | STA Resource Allocation Info to Suppress |

C-OFDMA

No info

- Indicate number of STAs under each AP in Number of STA field in Common info
- Define plurality of MAP scheme Elements in MAP scheme List field in Common Info and specify combination of MAP schemes

- Specify MAP scheme Index and number of MAP scheme Dependent Info included in Per STA Info, in Number of RUs field in Per AP Info
- MAP scheme Index indicates index of MAP scheme Element defined in MAP scheme List
- MAP scheme Dependent Info is composed of elements corresponding to MAP schemes indicated by MAP scheme Indexes

FIG. 8

| Frame Control | Duration | RA | TA | Common Info | Per STA Info | ...... | Per STA Info | Padding | FCS |
|---|---|---|---|---|---|---|---|---|---|

Number of RUs

| ...... | BW | ...... |
|---|---|---|

| STA ID | MAP scheme | Resource Allocation | UL/DL Flag | ...... | MAP scheme Dependent Info | ...... | MAP scheme Dependent Info |
|---|---|---|---|---|---|---|---|

| Number of RUs | RU#1 | RU#2 | ... |
|---|---|---|---|

C-SR Type 1

| DL ARIL | DL RSSI | DL Tx Power Gain |
|---|---|---|

| STA₁ ARIL | ... | STA_N ARIL | STA_{N+1} RSSI | ... | STA_M RSSI |
|---|---|---|---|---|---|

ARIL: Acceptable Receiver Interference Level

C-SR Type 2

| UL ARIL | UL RSSI | UL Tx Power Gain |
|---|---|---|

| AP₁ ARIL | ... | AP_N ARIL | AP_{N+1} RSSI | ... | AP_M RSSI |
|---|---|---|---|---|---|

| index | MAP scheme | MAP scheme Dependent Info |
|---|---|---|
| 0 | C-SR Type 1 | DL ARIL/RSSI, DL Tx Power Gain |
| 1 | C-SR Type 2 | UL ARIL/RSSI, UL Tx Power Gain |
| 2 | C-SR Type 3 | DL/UL ARIL/RSSI, Inter-AP/STA RSSI, DL/UL Tx Power Gain |
| 3 | C-OFDMA | No info |
| 4 | JT | Transmission Parameter |
| 5 | D-MIMO | |
| 6 | CBF | STA ID to Suppress, STA Resource Allocation Info to Suppress |
| . | . | . |
| . | . | . |

C-SR Type 3

| DL ARIL | UL ARIL | Inter-AP RSSI | Inter-STA RSSI | DL Tx Power Gain | UL Tx Power Gain |
|---|---|---|---|---|---|

| STA₁ ARIL | ... | STA_N ARIL | AP₁ ARIL | ... | AP_N ARIL | AP_{N+1} RSSI | ... | AP_M RSSI | STA_{N+1} RSSI | ... | STA_M RSSI |
|---|---|---|---|---|---|---|---|---|---|---|---|

JT D-MIMO

| Transmission Parameter |
|---|

CBF

| STA ID to Suppress | STA Resource Allocation Info to Suppress |
|---|---|

C-OFDMA

| No info |
|---|

- Indicate MAP scheme of plurality of RUs in MAP scheme field in Per STA Info

- Composed of MAP scheme Dependent Info for Number of RUs
- Composed of elements corresponding to MAP scheme indicated in MAP scheme field

FIG. 9

**FIG. 10**

EP 4 561 199 A1

FIG. 11

EP 4 561 199 A1

Power    Up

Power    Control

Down

STA#1
**MCS#Y+**

STA#0
MCS#X

Total Power constant

P20

S20

Freq.

OFDMA

STA#2
MCS#Z

P20

S20

Freq.

SR

Non - SR

FIG. 12

EP 4 561 199 A1

FIG. 13

EP 4 561 199 A1

FIG. 14

EP 4 561 199 A1

AP#0
(Sharing AP)

AP#1
(Shared AP)

STA#0
(AP#0
associated)

STA#1
(AP#0
associated)

STA#2
(AP#1
associated)

setup phase

(Beacon frame,
Probe
Request/Response
frame, Association
Request/Response
frame, Action frame)

measurement phase

(MAP NDPA frame,
MAP NDP frame,
MAP Poll Trigger,
MAP BFR)

MAP setup phase

(MAP Setup
Request/Response
frame)

MAP data
transmission

(MAP trigger frame,
Data frame,
Ack/BlockAck
frame)

FIG. 15

EP 4 561 199 A1

setup phase

AP#0
(Sharing AP)

Beacon

Probe
Response

Probe
Response

AP#1
(Shared AP)

Beacon

Probe
Response

STA#0
(AP#0
associated)

Probe
Request

STA#1
(AP#0
associated)

Probe
Request

STA#2
(AP#1
associated)

Probe
Request

FIG. 16

FIG. 17

FIG. 18

FIG. 19

EP 4 561 199 A1

EP 4 561 199 A1

MAP setup phase | MAP data transmission

AP#0
(Sharing
AP)

MAP
SetupReq

MAP
trigger

Data & TF | S20
Data & TF | P20

ACK | S20
ACK | P20

AP#1
(Shared
AP)

MAP
SetupRes

S20
Data & TF | P20

S20
ACK | P20

Exchange ARIL, Tx Power, RSSI
information between APs

STA#0
(AP#0
associated)

S20
P20 | TB-PPDU

STA#1
(AP#0
associated)

S20 | TB-PPDU
P20

STA#2
(AP#1
associated)

S20
P20 | TB-PPDU

FIG. 20

Define "NGT (Next Generation Technology)" as next generation technology following EHT

| Element ID | Length | Element ID Extension | NGT Operation Parameters | Basic NGT-MCS And Nss Set | NGT Operation Information |
|---|---|---|---|---|---|

Octets: 1 / =255    1    1 / =114 (undefined value)    1    4    0 or 3 or 4 or 5 or 6 or 7

**NGT Operation element format**

| B0 | B1 | B2 | B3 | B4 B5 | B6 | B7 |
|---|---|---|---|---|---|---|
| NGT Operation Information Present | Disabled Subchannel Bitmap Present | NGT Default PE Duration | Group Addressed BU Indication Limit | Group Addressed BU Indication Exponent | TPC Supported Subchannel Information Present | Reserved |

Bits: 1    1    1    1    2    1    1

| Control | CCFS0 | CCFS0 | Disabled Subchannel Bitmap | TPC Supported Subchannel Bitmap |
|---|---|---|---|---|

Octets: 1    1    1    0 or 2    0 or 1 or 2

- Indicate that Subchannel with TPC Supported Subchannel Bitmap of 1 supports TPC

| B0 | B2 B3 | B7 |
|---|---|---|
| Channel Width | Reserved | |

Bits: 3    5

**Control subfield format**

| Channel Width subfield | NGT BSS channel width (MHz) |
|---|---|
| 0 | 20 |
| 1 | 40 |
| 2 | 80 |
| 3 | 160 |
| 4 | 320 |

- Presence or absence of TPC support may be indicated by "MAP scheme" instead of "TPC Supported"

FIG. 21

| Element ID | Length | Element ID Extension | TPC Supported Subchannel Parameters | TPC Supported Subchannel Information |
|---|---|---|---|---|

Octets: 1    1    1    1    0 or 1 or 2 or 3

=255    =114 (undefined value)

**TPC Supported Subchannel element format**

- Indicate that Subchannel with TPC Supported Subchannel Bitmap of 1 supports TPC

| TPC Supported Subchannel Information Present | TPC Supported Subchannel Bitmap Present | Reserved |
|---|---|---|

| Channel Width | TPC Supported Subchannel Bitmap |
|---|---|

Bits: 1    1    6      Octets: 1    0 or 1 or 2

| Channel Width subfield | NGT BSS channel width (MHz) |
|---|---|
| 0 | 20 |
| 1 | 40 |
| 2 | 80 |
| 3 | 160 |
| 4 | 320 |

- Presence or absence of TPC support may be indicated by "MAP scheme" instead of "TPC Supported"

FIG. 22

| Element ID | Length | First Channel Number | Number of Channels | TPC Supported Subchannel Bitmap |
|---|---|---|---|---|
| | | | | |

Octets:  1  1  1  1  variable
=245
(undefined value)

- Indicate that Subchannel with TPC Supported Subchannel Bitmap of 1 supports TPC
  - There is Bits for "Number of Channels"
    - Presence or absence of TPC support may be indicated by "MAP scheme" instead of "TPC Supported"

FIG. 23

EP 4 561 199 A1

| Code | Meaning |
|------|---------|
| ... | ... |
| 37 | Protected EHT |
| 38 | TPC Support |
| 39–125 | Reserved |
| ... | ... |

Category value

| MAP Action field value | Description |
|------------------------|-------------|
| 0 | TPC Support Setup Request |
| 1 | TPC Support Setup Report |
| 2–255 | Reserved |

TPC Support Action field values

| Category | TPC Support Action | Dialog Token | TPC Support Setup Elements |
|----------|--------------------|--------------|----------------------------|

Octets:    1         1         1         variable

TPC Support Setup Request

TPC Support Setup Report

| Channel Width | TPC Supported Subchannel Bitmap |
|---------------|--------------------------------|

Octets:    1         1 or 2

- Indicate that Subchannel with TPC Supported Subchannel Bitmap of 1 supports TPC

| Status Code |
|-------------|

Octets:    2

- Presence or absence of TPC support may be indicated by "MAP scheme" instead of "TPC Supported"

FIG. 24

| Code | Meaning |
|------|---------|
| ... | ... |
| 3 | Block Ack |
| **4** | **Public** |
| 5 | Radio Measurement |
| ... | ... |

Category value

| Public Action field value | Description |
|---------------------------|-------------|
| ... | ... |
| 47 | TPC Support Setup Request |
| 48 | TPC Support Setup Report |
| ... | ... |

TPC Support Action field values

| Category | Public Action | Dialog Token | TPC Support Setup Elements |
|----------|---------------|--------------|---------------------------|

Octets:  1          1          1          variable

TPC Support Setup Request

TPC Support Setup Report

| Channel Width | TPC Supported Subchannel Bitmap |
|---------------|--------------------------------|

Octets:  1          1 or 2

| Status Code |
|-------------|

Octets:  2

- Indicate that Subchannel with TPC Supported Subchannel Bitmap of 1 supports TPC

- Presence or absence of TPC support may be indicated by "MAP scheme" instead of "TPC Supported"

FIG. 25

EP 4 561 199 A1

| Code | Meaning |
|------|---------|
| ... | ... |
| 37 | Protected EHT |
| 38 | NGT |
| 39–125 | Reserved |
| ... | ... |

Category value

| NGT Action field value | Description |
|------------------------|-------------|
| 0 | NGT Compressed Beamforming/CQI |
| 1 | TPC Supported Subchannel Notification |
| ... | ... |

NGT Action field values

| Category | NGT Action | Dialog Token | TPC Supported Subchannel Notification |
|----------|-----------|--------------|----------------------------------------|

Octets:   1   1   1   variable

- May be defined in Operating Mode Notification frame or NGT MIMO Control field

| Channel Width | TPC Supported Subchannel Bitmap |
|---------------|----------------------------------|

Octets:   1   1 or 2

- Indicate that Subchannel with TPC Supported Subchannel Bitmap of 1 supports TPC

- Presence or absence of TPC support may be indicated by "MAP scheme" instead of "TPC Supported"

**TPC Supported Subchannel Notification field format**

FIG. 26

**Subfield of the EHT PHY Capabilities Information field**

| Subfield | Definition | Encoding |
|---|---|---|
| Power Boost Factor Support Extension | Indicates that the maximum range of power boost factors that a non-AP STA supports for the RUs in a received OFDMA EHT MU PPDU for extension. | Set to 0 to indicate a range of [0.5, 2]. Set to 1 to indicate a range of [0.1, 10]. |

FIG. 27

EP 4 561 199 A1

| RU/MRU size | Power Boost Factor Range |
|---|---|
| smaller than or equal to 242-tone | [0.5, 2] |
| larger than a 242-tone | [0.1, 10] |

FIG. 28

EP 4 561 199 A1

| Spatial reuse operation | Power Boost Factor Range |
|---|---|
| No Spatial reuse | [0.5, 2] |
| Spatial reuse | [0.1, 10] |

FIG. 29

FIG. 30

FIG. 31

EP 4 561 199 A1

100

101

105

CONTROLLER

RADIO
TRANSCEIVER

FIG. 32

204

201

CONTROLLER ← RADIO TRANSCEIVER

FIG. 33

EP 4 561 199 A1

FIG. 34

EP 4 561 199 A1

200

FIG. 35

## INTERNATIONAL SEARCH REPORT

| International application No. |
| --- |
| **PCT/JP2023/023857** |

| A. | CLASSIFICATION OF SUBJECT MATTER |
| --- | --- |

*H04W 52/38*(2009.01)i; *H04W 16/28*(2009.01)i; *H04W 84/12*(2009.01)i
FI:  H04W52/38; H04W16/28 110; H04W84/12

According to International Patent Classification (IPC) or to both national classification and IPC

| B. | FIELDS SEARCHED |
| --- | --- |

Minimum documentation searched (classification system followed by classification symbols)

H04B7/24-7/26;H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2014-93677 A (SHARP CORP) 19 May 2014 (2014-05-19) | 1, 9 |
|   | paragraph [0009] |   |
| Y |   | 4 |
| A |   | 2-3, 5-8 |
| Y | WO 2009/157356 A1 (SUMITOMO ELECTRIC INDUSTRIES, LTD) 30 December 2009 (2009-12-30) | 4 |
|   | paragraphs [0028]-[0029] |   |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **29 August 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |   |
|   | Telephone No. |

Form PCT/ISA/210 (second sheet) (January 2015)

## INTERNATIONAL SEARCH REPORT
### Information on patent family members

International application No.

**PCT/JP2023/023857**

| Patent document cited in search report | | | Publication date (day/month/year) | Patent family member(s) | Publication date (day/month/year) |
|---|---|---|---|---|---|
| JP | 2014-93677 | A | 19 May 2014 | (Family: none) | |
| WO | 2009/157356 | A1 | 30 December 2009 | US 2011/0105063 A1 paragraphs [0026]-[0027] EP 2293475 A1 CN 102047599 A | |

Form PCT/ISA/210 (patent family annex) (January 2015)

**REFERENCES CITED IN THE DESCRIPTION**

**Patent documents cited in the description**

- JP 2022115606 A